# EUROPEAN PATENT APPLICATION

(11) **EP 4 276 946 A1**
(43) Date of publication of application: **15.11.2023**
(21) Application number: 22902480.7
(22) Date of filing: 31.03.2022
(51) Int. Cl.: H01M 4/36, H01M 4/58

(54) **POSITIVE ELECTRODE ACTIVE MATERIAL, PREPARATION METHOD THEREFOR, AND POSITIVE ELECTRODE PLATE, SECONDARY BATTERY AND ELECTRIC DEVICE COMPRISING SAME**

(71) Applicant: Contemporary Amperex Technology Co., Limited, Ningde City, Fujian 352100 (CN)
(72) Inventor: MA, Qingyan, Fujian 352100 (CN); GUAN, Yingjie, Fujian 352100 (CN); ZHAO, Yuzhen, Fujian 352100 (CN); WEN, Yan, Fujian 352100 (CN); HUANG, Qisen, Fujian 352100 (CN)
(74) Representative: Jacob, Reuben Ellis
(86) International application number: PCT/CN2022/084465
(87) International publication number: WO 2023/184368

(57) **Abstract**

The present application provides a positive electrode active material containing the same, a preparation method therefor, and a positive electrode plate, a secondary battery and a power consuming device. The positive electrode active material has a core-shell structure including an inner core and a shell coating the inner core, the inner core has a chemical formula of Li₁₊ₓMn_{1-y}A_{y}P_{1-z}R_{z}O₄. The shell includes a first coating layer coating the inner core, a second coating layer coating the first coating layer, a third coating layer coating the second coating layer, and a fourth coating layer coating the third coating layer. The positive electrode active material of the present application can make the secondary battery have high energy density and good cycling performance, rate performance and safety performance.

## Description

### Technical Field

The application belongs to the technical field of batteries, and in particular relates to a positive electrode active material, a preparation method therefor, and a positive electrode plate, a secondary battery and an power consuming device containing the same.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. With the application and popularization of secondary batteries, the safety performance thereof has attracted more and more attention. Lithium manganese phosphate has become one of the most concerned positive electrode active materials due to its advantages of high capacity, good safety performance, and abundant sources of raw materials. However, lithium manganese phosphate is prone to manganese ion dissolution during charging, resulting in rapid capacity decay. Therefore, it is necessary to provide a positive electrode active material with good comprehensive performance.

### Summary of the Invention

The purpose of this application is to provide a positive electrode active material, a preparation method therefor, and a positive electrode plate, a secondary battery and an power consuming device containing the same. The secondary battery using the positive electrode active material has higher energy density and good cycling performance, rate performance and safety performance.

The first aspect of the present application provides a positive electrode active material having a core-shell structure, which includes an inner core and a shell coating the inner core, wherein
the inner core has a chemical formula of Li₁₊ₓMn_{1-y}A_{y}P_{1-z}R_{z}O₄, in which x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
the values of x, y, and z satisfy the following conditions: keeping the entire inner core electrically neutral;

The shell includes a first coating layer coating the inner core, a second coating layer coating the first coating layer, a third coating layer coating the second coating layer, and a fourth coating layer coating the third coating layer, wherein
the first coating layer includes crystalline pyrophosphate LiₐMP₂O₇ and/or M_{b}(P₂O₇)_{c}, 0 ≤ a ≤ 2, 1 ≤ b ≤ 4, 1 ≤ c ≤ 6, the values of a, b, and c satisfy the following conditions: keeping the crystalline pyrophosphate LiₐMP₂O₇ and/or M_{b}(P₂O₇)_{c} electrically neutral,
M in the crystalline pyrophosphate LiₐMP₂O₇ and M_{b}(P₂O₇)_{c} is each independently one or more elements selected from Fe, Ni, Mg, Co, Cu, Zn, Ti, Ag, Zr, Nb and Al;
the second coating layer includes crystalline phosphate XPO₄, X is one or more elements selected from Li, Fe, Ni, Mg, Co, Cu, Zn, Ti, Ag, Zr, Nb and Al;
the third coating layer is carbon;
and the fourth coating layer includes a polymer, and the polymer includes one or more selected from polysiloxane with a linear structure and polysiloxane with a ring structure.

After a great number of researches, the inventors found that a novel positive electrode active material with a core-shell structure can be obtained by modifying lithium manganese phosphate and coating lithium manganese phosphate with multiple layers. The positive electrode active material can significantly reduce the dissolution of manganese ions and the lattice change rate, and can be used in a secondary battery to improve the cycling performance, rate performance, safety performance and capacity performance of the battery.

In any embodiment of the present application, the polymer comprises at least one structural unit represented by formula 1, 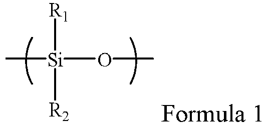 R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group; optionally, R₁ and R₂ each independently represent H or at least one selected from the group consisting of the following functional groups: -OH, -SH, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl.

These functional groups can complex manganese ions, reduce the dissolution of manganese ions, and at the same time remove F-containing ions in the electrolyte, further alleviate the erosion of the surface of positive active materials by acidic substances in the electrolyte, reduce interface side reactions, reduce gas production, and further improve the cycling performance and high temperature storage performance of the secondary battery.

In any embodiment of the present application, the polysiloxane with a linear structure further includes a blocking group. Optionally, the blocking group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl and a C1-C8 carboxyalkyl.

In any embodiment of the present application, the polysiloxane with a linear structure includes polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, polymethylchloropropylsiloxane, mercaptopropyl polysiloxane, aminoethylaminopropyl polydimethylsiloxane, hydroxypropyl-terminated polysiloxane, hydroxyl-terminated polydimethylsiloxane, polyether-terminated polydimethylsiloxane, side-chain aminopropyl polysiloxane, aminopropyl-terminated polydimethylsiloxane, side-chain hydroxymethyl polysiloxane, side-chain hydroxypropyl polysiloxane, side-chain polyether-grafted polydimethylsiloxane and side-chain phosphate-grafted polydimethylsiloxane.

Optionally it includes one or more selected from hydroxyl-terminated polydimethylsiloxane, mercaptopropyl polysiloxane, aminoethylaminopropyl polydimethylsiloxane, side-chain polyether-grafted polydimethylsiloxane, side-chain phosphate-grafted polydimethylsiloxane.

In any embodiment of the present application, the polysiloxane with a ring structure includes one or more selected from 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In any embodiment of the present application, the polymer is selected from polysiloxane with a linear structure. The electrons in the ring of the polysiloxane with a ring structure have certain delocalization, so compared with the polysiloxane with a linear structure, its Si-O skeleton has a lower affinity for electron-rich F-containing ions, and then the removal rate of F-containing ions in the electrolyte is slightly lower, and the effect of improving the cycling performance of the secondary battery is slightly poor.

In any embodiment of the present application, the number-average molecular weight of the polymer is below 300,000, optionally between 400 and 200,000. When the number-average molecular weight of the polymer is in an appropriate range, the positive electrode active material can simultaneously have good kinetic performance and high temperature storage performance.

In any embodiment of the present application, the polysiloxane has a polar functional group mass content percentage of α, with 0 ≤ α < 50%, optionally 5% ≤ α ≤ 30%. When the polar functional group content in polysiloxane is in an appropriate range, polysiloxane has better coating modification effect on the inner core.

In any embodiment of the present application, a coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core.

In any embodiment of the present application, a coating amount of the second coating layer is greater than 0 and less than or equal to 6 wt%, optionally greater than 0 and less than or equal to 5.5 wt%, more optionally 2-4 wt%, based on the weight of the inner core.

In any embodiment of the present application, a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In any embodiment of the present application, a coating amount of the fourth coating layer is greater than 0 and less than or equal to 10 wt%, optionally greater than 0 and less than or equal to 5 wt%, more optionally greater than 0 and less than or equal to 2 wt%, based on the weight of the inner core having the first coating layer, the second coating layer and the third coating layer.

In the positive electrode active material with a core-shell structure of the present application, the coating amount of the four-layer coating layer in the present application is preferably within the above range, which thus can enable the full coating of the inner core, while further improving the kinetic performance, cycling performance and safety performance of the secondary battery without sacrificing the gram capacity of the positive electrode active material.

In any embodiment of the present application, the thickness of the first coating layer is 1-10 nm. In this case, the adverse effect on the kinetic performance of the material that may occur when the first coating layer is too thick can be avoided, and the problem that the first coating layer cannot effectively hinder the migration of transition metal ions when the first coating layer is too thin can be avoided.

In any embodiment of the present application, the thickness of the second coating layer is 2-15 nm. At this time, the surface structure of the second coating layer is stable, and the side reaction with the electrolyte is small, so the interface side reaction can be effectively reduced, thereby improving the high temperature cycling performance and the high temperature storage performance of the secondary battery.

In any embodiment of the present application, the thickness of the third coating layer is 2-25 nm. At this time, the electrical conductivity of the positive electrode active material can be improved and the compacted density of the positive electrode plate prepared by using the positive electrode active material can be improved.

In any embodiment of the present application, the fourth coating layer has a thickness of 2-10 nm. At this time, the stability of the electrolyte of the positive electrode active material can be improved, the erosion of the electrolyte on the surface of the positive electrode active material can be reduced, and the adverse effect on the kinetic performance of the positive electrode active material that may occur when the thickness is too thick can be avoided.

In any embodiment of the present application, the first coating layer has an interplanar spacing of the crystalline pyrophosphate of a range of 0.293-0.470 nm, and an included angle of the crystal direction (111) of 18.00°-32.00°; the second coating layer has an interplanar spacing of the crystalline phosphate of a range of 0.244-0.425 nm, and an included angle of the crystal direction (111) of 20.00°-37.00°.

Crystalline pyrophosphate and crystalline phosphate within the range of the above-mentioned interplanar spacing and angle can more effectively suppress the crystal lattice change rate of lithium manganese phosphate and the dissolution of manganese ions during the process of lithium intercalation-deintercalation, thereby improving the high temperature cycling performance and the high temperature storage performance of the secondary battery.

In any embodiment of the present application, the ratio of y to 1-y is 1 : 10 to 1 : 1, optionally 1 : 4 to 1 : 1. Thus, the cycling performance and rate performance of the secondary battery are further improved.

In any embodiment of the present application, the ratio of z to 1-z is 1 : 9 to 1 : 999, optionally 1 : 499 to 1 : 249. Thus, the cycling performance and rate performance of the secondary battery are further improved.

In any embodiment of the present application, the carbon in the third coating layer is a mixture of SP2-form carbon and SP3-form carbon, optionally, the molar ratio of the SP2-form carbon to the SP3-form carbon is any value within a range of 0.1-10, optionally any value within a range of 2.0-3.0. In the present application, the overall performance of the secondary battery is improved by limiting the molar ratio of the SP2-form carbon to the SP3-form carbon within the above range.

In any embodiment of the present application, based on the weight of the positive electrode active material, the manganese element content is in a range of 10 wt% to 35 wt%, optionally in a range of 15 wt% to 30 wt%, more optionally in a range of 17 wt% to 20 wt%. At this time, problems such as poor structural stability and density decrease of the positive electrode active material that may be caused by excessive manganese content can be effectively avoided, thereby improving the performance of the secondary battery such as cycling, storage and compaction density; and problems such as low voltage plateau that may be caused by too low manganese content can be avoided, thereby improving the energy density of the secondary battery.

In any embodiment of the present application, the content of phosphorus element is in a range of 12 wt% to 25 wt%, more optionally in a range of 15 wt% to 20 wt%. At this time, the following situations can be effectively avoided: if the content of phosphorus element is too high, the covalency of P-O may be too strong and affect the conduction of small polarons, thereby affecting the conductivity of the positive active material; if the content of phosphorus element is too low, the stability of the pyrophosphate lattice structure in the inner core and the first coating layer and/or the phosphate lattice structure in the second coating layer may be reduced, thereby affecting the overall stability of the positive electrode active material.

In any embodiment of the present application, the weight ratio of the manganese element to the phosphorus element is in the range of 0.90-1.25, optionally 0.95-1.20. At this time, the following situations can be effectively avoided: if the weight ratio is too large, the dissolution of manganese ions may increase, thereby affecting the stability of the positive electrode active material and the cycling performance and storage performance of the secondary battery; if the weight ratio is too small, the discharge voltage plateau of the positive electrode active material may drop, thereby reducing the energy density of the secondary battery.

In any embodiment of the present application, the lattice change rate of the positive electrode active material before and after the complete lithium intercalation-deintercalation is no more than 4%, optionally no more than 3.8%, more optionally 2.0-3.8%. At this time, the positive electrode active material can improve the capacity performance and rate performance of the secondary battery.

In any embodiment of the present application, the Li/Mn antisite defect concentration of the positive electrode active material is no more than 4%, optionally no more than 2.2%, more optionally 1.5-2.2%. The Li/Mn antisite defect concentration within the above range avoids the prevention of transport of Li⁺ by Mn²⁺, while increasing the capacity performance and rate performance of the positive electrode active material.

In any embodiment of the present application, the compacted density of the positive electrode active material at 3T is no less than 2.2 g/cm³, optionally no less than 2.2 g/cm³ and no more than 2.8 g/cm³. Thereby, it is advantageous to increase the volumetric energy density of the secondary battery.

In any embodiment of the present application, a surface oxygen valence state of the positive electrode active material is no more than -1.90, and optionally -1.90 to - 1.98. Therefore, by limiting the surface oxygen valence state of the positive electrode active material within the above range, the interface side reactions between the positive electrode active material and the electrolyte can be reduced, thereby improving the performance, such as cycling performance and high temperature storage performance, of the secondary battery.

A second aspect of the present application provides a method for preparing a positive electrode active material, including the following steps:
a step to provide an inner core material: the inner core has a chemical formula of Li₁₊ₓMn_{1-y}A_{y}P_{1-z}R_{z}O₄, wherein x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
coating steps: providing an LiₐMP₂O₇ and/or M_{b}(P₂O₇)_{c} and XPO₄ suspension respectively, adding the inner core material to the suspension, mixing and sintering same to obtain the inner core having a first coating layer, a second coating layer and a third coating layer, and coating the resulting inner core having a first coating layer, a second coating layer and a third coating layer with a polymer by a dry method or a wet method to obtain the positive electrode active material, where 0 ≤ a ≤ 2, 1 ≤ b ≤ 4, 1 ≤ c ≤ 6, the values of a, b and c satisfy the following conditions: keeping the crystalline pyrophosphate LiₐMP₂O₇ and/or M_{b}(P₂O₇)_{c} electrically neutral; M is each independently one or more elements selected from Fe, Ni, Mg, Co, Cu, Zn, Ti, Ag, Zr, Nb and Al; X is one or more elements selected from Li, Fe, Ni, Mg, Co, Cu, Zn, Ti, Ag, Zr, Nb and Al; the polymer includes one or more selected from polysiloxane with a linear structure and polysiloxane with a ring structure;
wherein the positive electrode active material has a core-shell structure, which includes the inner core and a shell coating the inner core, and the shell includes a first coating layer coating the inner core, a second coating layer coating the first coating layer, a third coating layer coating the second coating layer, and a fourth coating layer coating the third coating layer, the first coating layer includes crystalline pyrophosphate LiₐMP₂O₇ and/or M_{b}(P₂O₇)_{c}, the second coating layer includes crystalline phosphate XPO₄, the third coating layer is carbon, and the fourth coating layer includes a polymer, and the polymer includes one or more selected from polysiloxane with a linear structure and polysiloxane with a ring structure.

In any embodiment of the present application, the step of providing the inner core material comprises the following steps:
Step (1): mixing and stirring a manganese source, an element A dopant, and an acid in a container to obtain manganese salt particles doped with the element A;
Step (2): mixing the manganese salt particles doped with the element A with a lithium source, a phosphorus source and an element R dopant in a solvent to obtain a slurry, and sintering same under the protection of an inert gas atmosphere to obtain an inner core doped with the element A and the element R, wherein the inner core doped with the element A and the element R is Li₁₊ₓMn_{1-y}A_{y}P_{1-z}R_{z}O₄, in which x is any value in a range of -0.100 to 0.100, and y is any value in a range of 0.001 to 0.500, z is any value in a range of 0.001 to 0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S.

In any embodiment of the present application, in Step (1), the mixing is carried out at a temperature of 20-120°C, optionally 40-120°C.

In any embodiment of the present application, in Step (1), the stirring is carried out at 400-700 rpm for 1-9 hours, optionally 3-7 hours.

When the heating temperature and stirring time during the preparation of the inner core particles are within the above-mentioned range, the prepared inner core and the positive electrode active material prepared therefrom have fewer lattice defects, which is beneficial to inhibit the dissolution of manganese ions, and reduce the interfacial side reaction between the positive electrode active material and the electrolyte, thereby improving the cycling performance and the safety performance of the secondary battery.

In any embodiment of the present application, in Step (2), the mixing is carried out at a temperature of 20-120°C, optionally 40-120°C for 1-10 hours.

In any embodiment of the present application, the element A dopant is one or more of the elementary substance, carbonate, sulfate, chloride, nitrate, organic acid salt, oxide, and hydroxide of each of one or more elements selected from Zn, Al, Na, K, Mg, Mo, W, Ti, V, Zr, Fe, Ni, Co, Ga, Sn, Sb, Nb and Ge.

In any embodiment of the present application, the element R dopant is one or more of the inorganic acid, organic acid, sulfate, chloride, nitrate, organic acid salt, oxide, and hydroxide of each of one or more elements selected from B, Si, N and S.

In any embodiment of the present application, the coating step includes:
first coating step: dissolving an element M source, a phosphorus source and an acid, and optionally a lithium source in a solvent to obtain a first coating layer suspension; fully mixing the inner core obtained in the step of providing the inner core material with the first coating layer suspension obtained in the first coating step, drying, and then sintering same to obtain a first coating layer-coated material;
second coating step: dissolving an element X source, a phosphorus source and an acid in a solvent to obtain a second coating layer suspension; fully mixing the first coating layer-coated material obtained in the first coating step with the second coating layer suspension obtained in the second coating step, drying, and then sintering same to obtain a two-layer coating layer-coated material;
third coating step: dissolving a carbon source in a solvent, fully dissolving same to obtain a third coating layer solution; then adding the two-layer coating layer-coated material obtained in the second coating step into the third coating layer solution, uniformly mixing, drying, and then sintering same to obtain a three-layer coating layer-coated material;
fourth coating step: dissolving the polymer in a solvent, fully dissolving same to obtain a fourth coating layer solution; then adding the three-layer coating layer-coated material obtained in the third coating step into the fourth coating layer solution, uniformly mixing, drying to obtain a fourth-layer coating layer-coated material, that is, the positive electrode active material, or mixing the three-layer coating layer-coated material obtained in the third coating step with the polymer uniformly, and then sintering same to obtain a fourth-layer coating layer-coated material, that is, the positive electrode active material.

In any embodiment of the present application, in the first coating step, the pH of the solution dissolved with an element M source, a phosphorus source and an acid, and optionally a lithium source is controlled to be 3.5-6.5, followed by stirring and reacting for 1-5 h, and then the solution is brought to an increased temperature of 50-120°C and maintained at this temperature for 2-10 h.

In any embodiment of the present application, in the first coating step, the sintering is carried out at 650-800°C for 2-6 hours.

By controlling the conditions of the first coating step within the above range, the capacity performance, cycling performance, high temperature storage performance and rate performance of the secondary battery prepared using the positive electrode active material can be guaranteed or even improved.

In any embodiment of the present application, in the second coating step, after dissolving the element X source, phosphorus source and acid in the solvent, the mixture is stirred and reacted for 1-10 h, then the solution is brought to an increased temperature of 60-150°C and maintained at this temperature for 2-10 h.

In any embodiment of the present application, in the second coating step, the sintering is carried out at 500-700°C for 6-10 h.

In the step of providing the inner core material and the first coating step and the second coating step, before sintering, that is, in the preparation of the inner core material to be subjected to a chemical reaction (steps (1)-(2)) and in the preparation of the first coating layer suspension and the second coating layer suspension, the following situations can be avoided by selecting the reaction temperature and the reaction time as described above: when the reaction temperature is too low, the reaction cannot be started or the reaction rate is slow; when the temperature is too high, the product decomposes or forms a heterogeneous phase; when the reaction time is too long, the particle size of the product is larger, which may increase the time and difficulty of the subsequent process; when the reaction time is too short, the reaction is incomplete and fewer products are obtained.

In any embodiment of the present application, in the third coating step, the sintering is carried out at 700-800°C for 6-10 h.

By controlling the conditions of the third coating step within the above range, the capacity performance and compacted density of the positive electrode active material can be improved.

The preparation method of the positive electrode active material described in the application has wide sources of raw materials, low cost and simple process, which is conducive to industrialization.

A third aspect of the present application provides a positive electrode plate, comprising a positive electrode current collector and a positive electrode film layer provided on at least one surface of the positive electrode current collector, the positive electrode film layer comprising the positive electrode active material of the first aspect of the present application or the positive electrode active material prepared by the method of the second aspect of the present application, and the content of the positive electrode active material in the positive electrode film layer being 90-99.5 wt%, based on the total weight of the positive electrode film layer.

In any embodiment of the present application, the content of the positive electrode active material in the positive electrode film layer is 95-99.5 wt%, based on the total weight of the positive electrode film layer.

In any embodiment of the present application, the solid-liquid contact angle between the positive electrode film layer and the non-aqueous organic solvent is between 3° and 90°, optionally between 3° and 60°, and further between 10° and 30°. When the contact angle is in an appropriate range, the secondary battery can simultaneously have high energy density and good rate performance, cycling performance and high temperature storage performance.

In any embodiment of the present application,the porosity of the positive electrode film layer is 15% to 50%, optionally 15% to 30%. When the porosity is in an appropriate range, the secondary battery can simultaneously have high energy density and good rate performance, cycling performance and high temperature storage performance.

The positive electrode plate of the present application is used in a secondary battery and can improve the energy density, cycling performance, rate performance and safety performance of the secondary battery.

A fourth aspect of the present application provides a secondary battery, comprising the positive electrode active material of the first aspect of the present application, or the positive electrode active material prepared by the method of the second aspect of the present application, or the positive electrode plate of the third aspect of the present application.

A fifth aspect of the present application provides a power consuming device, comprising the secondary battery of the fourth aspect of the present application.

The positive electrode plate, secondary battery, and power consuming device of the present application include the positive electrode active material of the present application, and thus have at least the same advantages as the positive electrode active material.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.
Fig. 1 is a schematic diagram of an embodiment of the secondary battery of the present application.
Fig. 2 is an exploded schematic diagram of the embodiment of the secondary battery shown in Fig. 1.
Fig. 3 is a schematic diagram of an embodiment of the battery module of the present application.
Fig. 4 is a schematic diagram of an embodiment of the battery pack of the present application.
Fig. 5 is an exploded schematic diagram of the embodiment of the battery pack shown in Fig. 4.
Fig. 6 is a schematic diagram of an embodiment of a power consuming device comprising the secondary battery of the present application as a power supply.

In the drawings, the figures are not necessarily drawn to scale. List of reference numerals: 1 battery pack, 2 upper case body, 3 lower case body, 4 battery module, 5 secondary battery, 51 housing, 52 electrode assembly, 53 cover plate.

### Detailed Description of Embodiments

Hereinafter, embodiments of the positive electrode active material of the present application, a preparation method therefor, and a positive electrode plate, a secondary battery, and a power consuming device including the same will be specifically disclosed in detail with reference to the accompanying drawings. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

Unless otherwise stated, all the embodiments and optional embodiments of the present application can be combined with one another to form new technical solutions, and such technical solutions should be considered to be included in the disclosure content of the present application.

Unless otherwise stated, all technical features and optional technical features of the present application can be combined with one another to form new technical solutions, and such technical solutions should be considered to be included in the disclosure content of the present application.

Unless otherwise stated, all the steps of the present application can be carried out sequentially or randomly, preferably sequentially. For example, the method comprising steps (a) and (b) indicates that the method may comprise steps (a) and (b) performed sequentially, and may further include steps (b) and (a) performed sequentially. For example, reference to "the method may further comprise step (c)" indicates that step (c) may be added to the method in any order, e.g., the method may comprise steps (a), (b) and (c), steps (a), (c) and (b), or also steps (c), (a) and (b), etc.

The terms "comprise" and "include" mentioned in the present application are open-ended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

In the present application, "about" a numerical value means a range, i.e., a range of ±10% of the numerical value.

It should be noted that, herein, the term "coating layer" refers to a material layer coated on the lithium manganese phosphate inner core, and the material layer can completely or partially coat the lithium manganese phosphate inner core, and the use of "coating layer" is just for convenience of description and is not intended to limit the present invention. In addition, each coating layer can be fully coating or partially coating. Likewise, the term "thickness of the coating layer" refers to the thickness of the material layer coated on the lithium manganese phosphate inner core in the radial direction of the lithium manganese phosphate inner core.

Herein, the median particle size Dv50 represents a particle size corresponding to a cumulative volume distribution percentage of the material reaching 50%. In the present application, the median particle size Dv50 of the material may be determined using a laser diffraction particle size analysis method. For example, the determination may be carried out with reference to the standard GB/T 19077-2016 using a laser particle size analyzer (e.g., Malvern Master Size 3000).

Herein, the term "aliphatic hydrocarbon group" includes alkyl, alkenyl and alkynyl, and the term "heteroaliphatic hydrocarbon group" means an aliphatic hydrocarbon group containing a heteroatom (such as N, O, S, etc.). The term "heteroalkyl" means an alkyl group containing a heteroatom (such as N, O, S, etc.), and is for example alkoxy, alkylthio, etc.

The inventors of the present application have found in practical work that the existing lithium manganese phosphate positive electrode active material suffers from severe dissolution of manganese ions during deep charging and discharging. Although there is an attempt in the prior art to coat lithium manganese phosphate with lithium iron phosphate to reduce interfacial side reactions, this coating cannot prevent the dissolved manganese ions from continuing to migrate into the electrolyte. The dissolved manganese ions are reduced to metal manganese after migrating to the negative electrode. The metal manganese produced in this way is equivalent to a "catalyst", which can catalyze the decomposition of the SEI film (solid electrolyte interphase, solid electrolyte interphase film) on the surface of the negative electrode to produce by-products; a part of the by-products is gas, thus causing the secondary battery to swell and affecting the safety performance of the secondary battery; in addition, another part of the by-products is deposited on the surface of the negative electrode, and hinders the passage of lithium ions into and out of the negative electrode, resulting in an increase in the impedance of the secondary battery, thus affecting the kinetic performance of the secondary battery. In addition, in order to supplement the lost SEI film, the active lithium in the electrolyte and the battery are continuously consumed, which will have an irreversible impact on the capacity retention rate of the secondary battery.

After a great number of researches, the inventors found that a novel positive electrode active material with a core-shell structure can be obtained by modifying lithium manganese phosphate and coating lithium manganese phosphate with multiple layers. The positive electrode active material can significantly reduce the dissolution of manganese ions and the lattice change rate, and can be used in a secondary battery to improve the cycling performance, rate performance, safety performance and capacity performance of the battery.

### Positive electrode active material

The first aspect of the present application provides a novel positive electrode active material having a core-shell structure, which includes an inner core and a shell coating the inner core, wherein
the inner core has a chemical formula of Li₁₊ₓMn_{1-y}A_{y}P_{1-z}R_{z}O₄, in which x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
the values of x, y, and z satisfy the following conditions: keeping the entire inner core electrically neutral;
the shell includes a first coating layer coating the inner core, a second coating layer coating the first coating layer, a third coating layer coating the second coating layer, and a fourth coating layer coating the third coating layer, wherein
the first coating layer includes crystalline pyrophosphate LiₐMP₂O₇ and/or M_{b}(P₂O₇)_{c}, 0 ≤ a ≤ 2, 1 ≤ b ≤ 4, 1 ≤ c ≤ 6, the values of a, b, and c satisfy the following conditions: keeping the crystalline pyrophosphate LiₐMP₂O₇ and/or M_{b}(P₂O₇)_{c} electrically neutral, M in the crystalline pyrophosphate LiₐMP₂O₇ and M_{b}(P₂O₇)_{c} is each independently one or more elements selected from Fe, Ni, Mg, Co, Cu, Zn, Ti, Ag, Zr, Nb and Al;
the second coating layer includes crystalline phosphate XPO₄, X is one or more elements selected from Li, Fe, Ni, Mg, Co, Cu, Zn, Ti, Ag, Zr, Nb and Al;
the third coating layer is carbon;
and the fourth coating layer includes a polymer, and the polymer includes one or more selected from polysiloxane with a linear structure and polysiloxane with a ring structure.

Unless otherwise stated, in the chemical formula of the above inner core, when A is a combination of at least two elements, the above definition of the numerical range of y not only represents a definition of the stoichiometric number of each element as A, but also represents a definition of the sum of the stoichiometric numbers of the elements as A. For example, when A is a combination of at least two elements A1, A2...An, the stoichiometric numbers y1, y2...yn of A1, A2...An each fall within the numerical range of y defined in the present application, and the sum of y1, y2...yn also falls within this numerical range. Similarly, when R is a combination of at least two elements, the definitions of the numerical ranges of the stoichiometric numbers of R in the present application also have the above meanings.

In an optional embodiment, when A is one, two, three or four elements selected from Zn, Al, Na, K, Mg, Mo, W, Ti, V, Zr, Fe, Ni, Co, Ga, Sn, Sb, Nb and Ge, A_{y} is Qₙ₁Dₙ₂Eₙ₃Kₙ₄, wherein n1 + n2 + n3 + n4 = y, and n1, n2, n3 and n4 are all positive numbers and not zero at the same time. Q, D, E, K are each independently selected from one of Zn, Al, Na, K, Mg, Mo, W, Ti, V, Zr, Fe, Ni, Co, Ga, Sn, Sb, Nb and Ge, optionally, at least one of Q, D, E and K is Fe. Optionally, one of n1, n2, n3 and n4 is zero, and the rest are not zero; more optionally, two of n1, n2, n3 and n4 are zero, and the rest are not zero; also optionally, three of n1, n2, n3, and n4 are zero, and the rest are not zero. in the inner core Li₁₊ₓMn_{1-y}A_{y}P_{1-z}R_{z}O₄, it is advantageous to dope one, two, three or four of the above-mentioned A elements at the manganese site, and optionally, one, two or three of the above-mentioned A elements; in addition, it is advantageous to dope one or two of the R elements at the phosphorus site, which is conducive to uniform distribution of doping elements.

In the inner core Li₁₊ₓMn_{1-y}A_{y}P_{1-z}R_{z}O₄, the value of x is depended on the valence value of A and R and the value of y and z, so as to ensure that the whole system is electrically neutral. If the value of x is too small, the lithium content of the entire inner core system will decrease, which will affect the capacity performance of the positive electrode active material. The value of y will limit the total amount of all doping elements. If y is too small, that is, the amount of doping elements is too low, the doping elements will have no effect. If y exceeds 0.5, the Mn content in the system will be low, which will affect the voltage plateau of the material. The R element is doped at the position of P. Since the P-O tetrahedron is relatively stable and the excessive z value will affect the stability of the material, the z value is limited to 0.001 to 0.100.

The positive electrode active material of the present application can improve the capacity performance, cycling performance, rate performance and safety performance of the secondary battery. Although the mechanism is not yet clear, it is speculated that the lithium manganese phosphate positive electrode active material of the present application has a core-shell structure, wherein doping the lithium manganese phosphate inner core at the manganese and phosphorus sites with element A and element R, not only can effectively reduce the dissolution of manganese ions, and then reduce the migration of manganese ions to the negative electrode, reduce the consumption of electrolyte due to the decomposition of the SEI film, improve the cycling performance and safety performance of the secondary battery, and also promote the adjustment of Mn-O bonds, reduce the migration barrier of lithium ions, and promote the migration of lithium ions, and improve the rate performance of the secondary battery. Coating the inner core with a first coating layer including crystalline pyrophosphate can further increase the migration resistance of manganese ions, and reduce the dissolution thereof, the content of lithium impurity on the surface, and the contact between the inner core and the electrolyte, thereby reducing the interface side reactions, reducing gas production, improving the high-temperature storage performance, cycling performance and safety performance of secondary batteries. Further coating with a crystalline phosphate coating layer with excellent lithium ion conductivity, the interface side reactions between the positive electrode active material and the electrolyte can be effectively reduced, thereby improving the high-temperature cycling and storage performance of the secondary battery. Further coating with a carbon layer as the third coating layer, can further improve the safety performance and kinetic performance of the secondary; Further coating with a polymer as the fourth coating layer, can further hinder the migration of manganese ions into the electrolyte, and reduce the erosion of the electrolyte on the surface of the positive electrode active material, reduce the interface side reaction, reduce gas production, and further improve the cycling performance and high temperature storage performance of the secondary battery.

In addition, in the inner core, the element A doped at the manganese site of lithium manganese phosphate also facilitates to reduce the lattice change rate of the lithium manganese phosphate during the process of lithium intercalation-deintercalation, and improves the structural stability of the lithium manganese phosphate positive electrode active material, greatly reducing the dissolution of manganese ions and reducing the oxygen activity on the particle surface. The element R doped at the phosphorus site also facilitates to change the difficulty of the change of the Mn-O bond length, thereby improving the electron conductivity and reducing the migration barrier of lithium ions, promoting the migration of lithium ions, and improving the rate performance of the secondary battery.

In addition, the entire inner core system keeps electrical neutrality, which can ensure that the defects and impurity phases in the positive electrode active material are as small as possible. If there is an excess of a transition metal (such as manganese) in the positive electrode active material, since the structure of the material system itself is relatively stable, the excess transition metal is likely prone to be precipitated in the form of an elementary substance, or form impurity phases inside the lattice to keep the electrical neutrality, so that such an impurity can be as little as possible. In addition, ensuring the electrical neutrality of the system can also result in lithium vacancies in the positive electrode active material in some cases, so that the kinetic performance of the positive electrode active material is more excellent.

The average particle size range of the inner core prepared in the present application is 50-500 nm, and the Dv50 is 200-300 nm. The primary particle size of the core is in a range of 50-500 nm, and the Dv50 is 200-300 nm. If the average particle size of the inner core is too large (more than 500 nm), the capacity performance of the secondary battery using the material will be affected; if the average particle size of the inner core is too small, the inner core's specific surface area will be large, and the inner core will be easy to aggregate, making it difficult to achieve uniform coating.

It is possible to ensure that each element is uniformly distributed in the crystal lattice without aggregation by means of process control (for example, sufficient mixing and grinding of various source materials). The positions of the main characteristic peaks in the X-ray diffraction (XRD) pattern of the lithium manganese phosphate doped with A and R elements are consistent with those of the undoped LiMnPO₄, indicating that no impurity phase is introduced in the doping process, and an improvement in performance of the inner core is mainly attributed to the doping with elements, rather than an impurity phase. After preparing the positive electrode active material of the present application, the inventors of the present application cut out an middle area (inner core region) of the prepared positive electrode active material particles by a focusing ion beam (abbreviated as FIB), and tested through transmission electron microscope (abbreviated as TEM) and X-ray energy dispersive spectrum (abbreviated as EDS) analysis and found that the elements are uniformly distributed with no aggregation.

In the present application, the crystalline state means that the crystallinity is 50% or more, that is, 50%-100%. A crystalline state with a crystallinity less than 50% is referred to as a glassy state (or amorphous). The crystallinity of the crystalline pyrophosphate and crystalline phosphate of the present application is 50% to 100%. The pyrophosphate and phosphate with a certain crystallinity enable not only the full achievement of the ability of the pyrophosphate coating layer to prevent the dissolution of manganese ions and the excellent ability of the phosphate coating layer to conduct lithium ions, as well as the reduction of the interface side reactions, but also the better lattice matching between the phosphate coating layer and the phosphate coating layer, such that a close combination of the coating layers can be achieved.

In the present application, the crystallinity of the first coating layer material crystalline pyrophosphate and the second coating layer material crystalline phosphate of the positive electrode active material can be determined by conventional technical means in this field, for example, by a density method, an infrared spectroscopy, a differential scanning calorimetry, and a nuclear magnetic resonance absorption method, and can also be determined by, for example, a X-ray diffraction method.

The specific method for determining the crystallinity of the first coating layer crystalline pyrophosphate and the second coating layer crystalline phosphate of the positive electrode active material by X-ray diffraction method may include the following steps: taking a certain amount of a positive electrode active material powder, and measure the total scattering intensity by X-rays, which is the sum of the scattering intensity of the material in the whole space, only related to the intensity of the primary rays, the chemical structure of the positive electrode active material powder, and the total number of electrons participating in the diffraction, that is the mass, but has nothing to do with the ordered state of the sample; then the crystalline scattering and non-crystalline scattering are separated from the diffraction pattern, and the crystallinity is the ratio of the crystalline partial scattering to the total scattering intensity.

It should be noted that, in the present application, the crystallinity of pyrophosphate and phosphate in the coating layer can be adjusted, for example, by adjusting the process conditions of the sintering process, such as the sintering temperature, and sintering time.

In the present application, since metal ions are difficult to migrate in pyrophosphate, pyrophosphate as the first coating layer can effectively isolate doped metal ions from the electrolyte. The structure of crystalline pyrophosphate is stable, therefore, coating with crystalline pyrophosphate can effectively inhibit the dissolution of transition metals and improve cycling performance.

The combination between the first coating layer and the inner core is similar to a heterojunction, and the firmness of the combination is limited by the degree of lattice matching. When the lattice mismatch is below 5%, the lattice matching is good, and the two are easy to combine closely. The close combination can ensure that the coating layer will not fall off in the subsequent cycling process, which is beneficial to ensure the long-term stability of the positive electrode active material. The measurement of the combination degree between the first coating layer and the inner core is mainly performed by calculating the mismatch degree of each lattice constant between the inner core and the coating layer. In the present application, after A and R elements are doped in the inner core, the matching degree between the inner core and the first coating layer is improved compared with that without undoped elements, and the inner core and the pyrophosphate coating layer can be combined more closely.

Crystalline phosphate is selected as the second coating layer for reasons that first of all, it has a high lattice matching degree with the first coating material crystalline pyrophosphate (the mismatch degree is only 3%); secondly, the stability of phosphate itself is better than that of pyrophosphate, and coating with pyrophosphate is beneficial to improve the stability of the positive electrode active material. Crystalline phosphate has a very stable structure and has an excellent ability to conduct lithium ions. Therefore, coating with crystalline phosphate can effectively reduce the interface side reaction between the positive electrode active material and the electrolyte, thereby improving the high temperature cycling performance and high temperature storage performance of the secondary battery. The lattice matching between the second coating layer and the first coating layer is similar to the combination between the first coating layer and the inner core. When the lattice mismatch is below 5%, the lattice matching is good, and the two are easy to combine closely.

The main reason why carbon is used as the third coating layer is that the electronic conductivity of the carbon layer is good. Since the electrochemical reaction occurs in the application of the secondary battery and the participation of electrons is required, carbon with excellent electrical conductivity can be used to coat the positive electrode active material to increase electron transfer between particles and at different positions on the particles. Coating with carbon can effectively improve the electrical conductivity and desolvation ability of the positive electrode active material.

The fourth coating layer includes one or more of polysiloxane with a linear structure and polysiloxane with a ring structure. The Si-O skeleton of polysiloxane can remove F-containing ions from the electrolyte and alleviate the corrosion of acidic substances on the surface of the positive electrode active material. Polysiloxane has a certain degree of hydrophobicity, can increase the contact angle between the electrolyte and the positive electrode plate, and further alleviate the erosion of the electrolyte on the surface of the positive electrode active material. In addition, the fourth coating layer can also play a role in reducing the contact between the electrolyte and the inner core.

In some embodiments, the average particle size of the primary particles of the positive active material is in a range of 50-500 nm, and the volumetric median particle size Dv50 is in a range of 200-300 nm. Since the particles will be aggregated, the actual measured secondary particle size after aggregation may be 500-40,000 nm. The particle size of the positive active material affects the processing of the material and the compacted density performance of the electrode plate. By selecting the average particle size of the primary particles within the above range, the following situations can be effectively avoided: if the average particle size of the primary particles of the positive electrode active material is too small, it may cause particle aggregation, difficult dispersion, and need more binder, resulting in poor brittleness of the electrode plate; if the average particle size of the primary particles of the positive electrode active material is too large, the gaps between the particles may be large and the compacted density may be reduced.

The above scheme can effectively suppress the crystal lattice change rate of lithium manganese phosphate and the dissolution of manganese ions during the process of lithium intercalation-deintercalation, thereby improving the high temperature cycle performance and the high temperature storage performance of the secondary battery.

In some embodiments, the first coating layer has an interplanar spacing of the crystalline pyrophosphate of a range of 0.293-0.470 nm, and an included angle of the crystal direction (111) of 18.00°-32.00°; the second coating layer has an interplanar spacing of the crystalline phosphate of a range of 0.244-0.425 nm, and an included angle of the crystal direction (111) of 20.00°-37.00°.

Both the first coating layer and the second coating layer in the positive electrode active material of the present application are crystalline substances. The crystalline pyrophosphate and crystalline phosphate in the coating layers can be characterized by conventional technical means in the art, and can also be characterized, for example, by means of a transmission electron microscope (TEM). Under TEM, the inner core and the coating layer can be distinguished by measuring the interplanar spacing.

The specific method for determining the interplanar spacing and the angle of the crystalline pyrophosphate and the crystalline phosphate in the coating layers can comprise the following steps: A certain amount of coated positive electrode active material sample powder is taken and placed in a test tube, and a solvent such as alcohol is injected into the test tube, then fully stirred and dispersed, and then a clean disposable plastic straw is used to take an appropriate amount of the solution, which is dripped on a 300-mesh copper mesh, at this moment, part of the powder will remain on the copper mesh. The copper mesh and the sample are transferred to TEM sample chamber for testing, and the original picture of the TEM test is obtained. The original picture obtained from the above TEM test is opened in a diffractometer software, and Fourier transform is performed to obtain a diffraction pattern, and the distance from the diffraction spot to the center position in the diffraction pattern is measured to obtain the interplanar spacing, and the angle is calculated according to the Bragg equation.

There are differences between the interplanar spacing range of crystalline pyrophosphate and that of crystalline phosphate, which differences can be directly determined by the value of interplanar spacing.

Crystalline pyrophosphate and crystalline phosphate within the range of the above-mentioned interplanar spacing and angle can more effectively suppress the crystal lattice change rate of lithium manganese phosphate and the dissolution of manganese ions during the process of lithium intercalation-deintercalation, thereby improving the high temperature cycling performance and the high temperature storage performance of the secondary battery.

In some embodiments, in the inner core, the ratio of y to 1-y is 1 : 10 to 1 : 1, optionally 1 : 4 to 1 : 1. Here, y denotes the sum of the stoichiometric numbers of the Mn-site doping element A. When the above conditions are satisfied, the energy density and cycling performance of the secondary battery using the positive electrode active material can be further improved.

In some embodiments, in the inner core, the ratio of z to 1-z is 1 : 9 to 1 : 999, optionally 1 : 499 to 1 : 249. Here, z denotes the sum of the stoichiometric numbers of the P-site doping element R. When the above conditions are satisfied, the energy density and cycling performance of the secondary battery using the positive electrode active material can be further improved.

In some embodiments, the carbon in the third coating layer is a mixture of SP2-form carbon and SP3-form carbon, optionally, the molar ratio of the SP2-form carbon to the SP3-form carbon is any value within a range of 0.1-10, optionally any value within a range of 2.0-3.0.

In some embodiments, the molar ratio of the SP2-form carbon to SP3-form carbon can be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or within any range of any of the above values.

The comprehensive electrochemical performance of the secondary battery is improved by selecting the form of carbon in the carbon coating layer. Specifically, by using a mixed form of SP2-form and SP3-form carbon and limiting the ratio of SP2-form to SP3-form carbon within a certain range, the following can be effectively avoided: if the carbon in the coating layer is in the form of amorphous SP3, the conductivity is poor; if all the carbon is in a graphitized SP2-form, although the conductivity is good, there are few lithium ion paths, which is not conducive to the deintercalation of lithium ions. In addition, limiting the molar ratio of SP2-form carbon to SP3-form carbon within the above range can not only achieve good electrical conductivity, but also ensure the paths of lithium ions, which is beneficial to improve the kinetic performance and cycling performance of the secondary battery.

The mixing ratio of the SP2-form and the SP3-form of the carbon of the third coating layer can be controlled by sintering conditions such as the sintering temperature and sintering time. For example, in the case of using sucrose as the carbon source to prepare the third coating layer, sucrose is cracked at high temperature, and then deposited on the second coating layer. At the same time, under the action of high temperature, a carbon coating layer with both SP2-form and SP3-form will be produced. The ratio of SP2-form carbon to SP3-form carbon can be adjusted by selecting pyrolysis conditions and sintering conditions.

The structure and characteristics of the carbon in the third coating layer can be determined by Raman spectroscopy, and the specific determination method is as follows: splitting the energy spectrum of the Raman measurement, to obtain Id/Ig (where Id is the peak intensity of SP3-form carbon, and Ig is the peak intensity of SP2-form carbon) and thus to confirm the molar ratio of the two forms.

In some embodiments, the polymer in the fourth coating layer comprises at least one structural unit represented by formula 1, 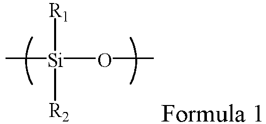 R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group. optionally, R₁ and R₂ each independently represent H or at least one selected from the group consisting of the following functional groups: -OH, -SH, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl.

These functional groups can complex manganese ions, reduce the dissolution of manganese ions, and at the same time remove F-containing ions in the electrolyte, further alleviate the erosion of the surface of positive active materials by acidic substances in the electrolyte, reduce interface side reactions, reduce gas production, and further improve the cycling performance and high temperature storage performance of the secondary battery.

In some embodiments, the polysiloxane with a linear structure can further includes a blocking group. Optionally, the blocking group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl and a C1-C8 carboxyalkyl.

As an example, the polysiloxane with a linear structure includes polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, polymethylchloropropylsiloxane, mercaptopropyl polysiloxane, aminoethylaminopropyl polydimethylsiloxane, hydroxypropyl-terminated polysiloxane, hydroxyl-terminated polydimethylsiloxane, polyether-terminated polydimethylsiloxane, side-chain aminopropyl polysiloxane, aminopropyl-terminated polydimethylsiloxane, side-chain hydroxymethyl polysiloxane, side-chain hydroxypropyl polysiloxane, side-chain polyether-grafted polydimethylsiloxane and side-chain phosphate-grafted polydimethylsiloxane.

Optionally the polysiloxane with a linear structure includes one or more selected from hydroxyl-terminated polydimethylsiloxane, mercaptopropyl polysiloxane, aminoethylaminopropyl polydimethylsiloxane, side-chain polyether-grafted polydimethylsiloxane, side-chain phosphate-grafted polydimethylsiloxane.

As an example, the polysiloxane with a ring structure includes one or more selected from 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

In some embodiments, the polymer is selected from polysiloxane with a linear structure. The electrons in the ring of the polysiloxane with a ring structure have certain delocalization, so compared with the polysiloxane with a linear structure, its Si-O skeleton has a lower affinity for electron-rich F-containing ions, and then the removal rate of F-containing ions in the electrolyte is slightly lower, and the effect of improving the cycling performance of the secondary battery is slightly poor.

In some embodiments, the number-average molecular weight of the polymer is no more than 300,000, for example, 400 to 300,000, 400 to 200,000, 400 to 100,000, 400 to 80,000, 400 to 50,000, 400 to 20,000, 400 to 10,000, 1000 to 100,000, 1,000 to 50,000, 1,000 to 20,000, or 1,000 to 10,000. The number-average molecular weight of the polymer can be determined by methods known in the art, for example using gel permeation chromatography (GPC). The instrument for determination can be PL-GPC 220 high temperature gel permeation chromatography. In the present application, "polymer" can be either a low polymer or a high polymer, which is not limited in the present application.

When the number-average molecular weight of the polymer is in an appropriate range, the positive electrode active material can simultaneously have good kinetic performance and high temperature storage performance, and the following situations can be effectively avoided: if the number-average molecular weight of the polymer is too small to achieve obvious coating modification effect on the inner core, and the improvement of the cycling performance of the secondary battery is not obvious; if the number-average molecular weight of the polymer is too large, the hydrophobicity of the polymer may be strong, which may affect the kinetic performance of the secondary battery, and may also lead to poor coating modification effect.

In some embodiments, the polysiloxane has a polar functional group mass content percentage of α, with 0 ≤ α < 50%, optionally 5% ≤ α ≤ 30%.

In the present application, "polar functional group mass content percentage in polysiloxane" refers to the mass percentage of polar functional groups in R₁, R₂ and blocking groups in polysiloxane. In the present application, polar functional groups include one or more of -COOH, -OH, -SH, -CN, -SCN, an amino group (including -NH₂ and -NH-), a phosphate group, a carboxylate group (-COO-), an amido group (-CONH-), an aldehyde group (-CHO), a sulfonyl group (-S(=O)₂-), a polyether segment, a halogen, alkoxy, and an epoxy group. When the above polar functional groups are directly connected to silicon atoms, α represents the mass fraction of these polar functional groups in polysiloxane; When the above polar functional groups are not directly connected to silicon atoms, α represents the sum of the mass fraction of the polar functional groups and the divalent to tetravalent methyl groups directly connected thereto (such as -CH₂, -CH-, - C-, etc.) in polysiloxane; the "divalent to tetravalent methyl" means the carbon atom directly connected to the polar functional group and located between the polar functional group and the silicon atom, and other nonpolar functional groups connected to the carbon atom. Taking polymethyltrifluoropropylsiloxane as an example, α refers to the mass percentage of -CF₃, excluding the ethylene group; taking polymethylchloropropylsiloxane as an example, α refers to the mass percentage of -CH₂Cl, excluding the ethylene group; taking hydroxypropyl-terminated polydimethylsiloxane as an example, α refers to the mass percentage of -CH₂OH. The polar functional group mass content percentage in polysiloxane can be determined by methods known in the art, such as titration (such as acid-base titration, redox titration, and precipitation titration), infrared spectroscopy, and nuclear magnetic resonance spectroscopically.

When the polar functional group content in polysiloxane is in an appropriate range, polysiloxane has better coating modification effect on the inner core, and the following situations can be effectively avoided: When the polar functional group content in polysiloxane is too high, the ability of the polymer to remove F-containing ions in the electrolyte will not be further improved, but the contact angle between the electrolyte and the positive electrode plate may become smaller, as a result, the improvement effect on the cycling performance of the secondary battery is not obvious.

In some embodiments, a coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core.

In some embodiments, a coating amount of the second coating layer is greater than 0 and less than or equal to 6 wt%, optionally greater than 0 and less than or equal to 5.5 wt%, more optionally 2-4 wt%, based on the weight of the inner core.

In some embodiments, a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core.

In some embodiments, a coating amount of the fourth coating layer is greater than 0 and less than or equal to 10 wt%, optionally greater than 0 and less than or equal to 5 wt%, more optionally greater than 0 and less than or equal to 2 wt%, based on the weight of the inner core having the first coating layer, the second coating layer and the third coating layer.

In the present application, the coating amount of each layer is not zero.

In the positive electrode active material with a core-shell structure of the present application, the coating amount of the four-layer coating layer in the present application is preferably within the above range, which thus can enable the full coating of the inner core, while further improving the kinetic performance, cycling performance and safety performance of the secondary battery without sacrificing the gram capacity of the positive electrode active material.

For the first coating layer, the following situations can be effectively avoided by controlling the coating amount within the above-mentioned range: too low coating amount means that the coating layer is thin, and may not be able to effectively hinder the migration of transition metals; too high coating amount means that the coating layer is too thick, and may affect the migration of Li⁺, thereby affecting the rate performance of the positive electrode active material.

For the second coating layer, the following situations can be effectively avoided by controlling the coating amount within the above-mentioned range: too high coating amount may affect the overall plateau voltage of the positive electrode active material; too low coating amount may not be achieve a sufficient coating effect.

For the third coating layer, the carbon coating mainly plays the role of enhancing the electron transport between particles. However, since the structure also contains a large amount of amorphous carbon, the carbon density is low. Therefore, too high coating amount may affect the compaction density of the electrode plate.

For the fourth coating layer, the following situations can be effectively avoided by controlling the coating amount within the above-mentioned range: when the coating amount of the coating layer is too low, the coating modification effect of the coating layer on the inner core may not be obvious; when the coating amount of the coating layer is too high, the impedance of the battery may increase, which may affect the rate performance and cycling performance of the battery.

In some embodiments, the thickness of the first coating layer is 1-10 nm.

In some embodiments, the thickness of the second coating layer is 2-15 nm.

In some embodiments, the thickness of the third coating layer is 2-25 nm.

In some embodiments, the thickness of the fourth coating layer is 2-10 nm.

In some embodiments, the thickness of the first coating layer can be about 2 nm, about 3 nm, about 4 nm, about 5 nm, about 6 nm, about 7 nm, about 8 nm, about 9 nm, or about 10 nm, or within any range of any of the above values.

In some embodiments, the thickness of the second coating layer can be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, or within any range of any of the above numerical values.

In some embodiments, the thickness of the third coating layer can be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm or about 25 nm, or within any range of any of the above numerical values.

In some embodiments, the thickness of the fourth coating layer can be about 2 nm, about 3 nm, about 4 nm, about 5 nm, about 6 nm, about 7 nm, about 8 nm, about 9 nm, or about 10 nm, or within any range of any of the above values.

When the thickness of the first coating layer is in a range of 1-10 nm, the adverse effect on the kinetic performance of the positive electrode active material that may occur when the first coating layer is too thick can be avoided, and the problem that the first coating layer cannot effectively hinder the migration of transition metal ions when the first coating layer is too thin can be avoided.

When the thickness of the second coating layer is in a range of 2-15 nm, the surface structure of the second coating layer is stable, and the side reaction with the electrolyte is small, so the interface side reaction can be effectively reduced, thereby improving the high temperature cycle performance and the high temperature storage performance of the secondary battery.

When the thickness of the third coating layer is in a range of 2-25 nm, the electrical conductivity of the positive electrode active material can be improved and the compacted density of the positive electrode plate prepared by using the positive electrode active material can be improved.

When the thickness of the fourth coating layer is in a range of 2-10 nm, the stability of the electrolyte of the positive electrode active material can be improved, the erosion of the electrolyte on the surface of the positive electrode active material can be reduced, and the adverse effect on the kinetic performance of the positive electrode active material that may occur when the thickness is too thick can be avoided.

The thickness determination of the coating layer is mainly carried out by FIB, and the specific method may include the following steps: randomly selecting a single particle from the positive electrode active material powder to be tested, cut out a thin slice with a thickness of about 100 nm from the middle position or near the middle position of the selected particle, and then conducting a TEM test on the slice, measuring the thickness of the coating layer, with 3-5 positions being measured and the average value taken.

In some embodiments, based on the weight of the positive electrode active material, the manganese element content is in a range of 10 wt% to 35 wt%, optionally in a range of 15 wt% to 30 wt%, more optionally in a range of 17 wt% to 20 wt%.

In some embodiments, based on the weight of the positive electrode active material, the content of phosphorus element is in a range of 12 wt% to 25 wt%, more optionally in a range of 15 wt% to 20 wt%.

In some embodiments, the weight ratio of the manganese element to the phosphorus element is in the range of 0.90-1.25, optionally 0.95-1.20.

In the present application, in the case where manganese is contained only in the inner core of the positive electrode active material, the content of manganese may correspond to that of the inner core.

In the present application, limiting the content of the manganese element within the above-mentioned range can effectively avoid problems such as poor structural stability and density decrease of the positive electrode active material that may be caused by excessive manganese content, thereby improving the performance of the secondary battery such as cycling, storage and compaction density; and problems such as low voltage plateau that may be caused by too low manganese content can be avoided, thereby improving the energy density of the secondary battery.

In the present application, limiting the content of the phosphorus element within the above-mentioned range can effectively avoid the following situations: if the content of phosphorus element is too high, the covalency of P-O may be too strong and affect the conduction of small polarons, thereby affecting the conductivity of the positive active material; if the content of phosphorus element is too low, the stability of the pyrophosphate lattice structure in the inner core and the first coating layer and/or the phosphate lattice structure in the second coating layer may be reduced, thereby affecting the overall stability of the positive electrode active material.

The weight ratio of manganese to phosphorus content has the following effects on the performance of secondary battery: If the weight ratio is too large, it means that there are too many manganese element, and the dissolution of manganese ions may increase, thereby affecting the stability and capacity performance of the positive electrode active material, and affecting the cycling performance and storage performance of the secondary battery; if the weight ratio is too small, it means that there are too many phosphorus element, and impurity phases are easily formed, the discharge voltage plateau of the positive electrode active material may drop, thereby reducing the energy density of the secondary battery.

The determination of manganese and phosphorus elements can be carried out by conventional technical means in the art. In particular, the following methods are used to determine the manganese and phosphorus contents: dissolving the material in dilute hydrochloric acid (concentration 10-30%), measuring the content of each element in the solution using ICP, and then determining and converting the manganese content to obtain the weight percentage thereof.

In some embodiments, the lattice change rate of the positive electrode active material with a core-shell structure before and after the complete lithium intercalation-deintercalation is no more than 4%, optionally no more than 3.8%, more optionally 2.0-3.8%.

The process of lithium intercalation-deintercalation of lithium manganese phosphate (LiMnPO₄) is a two-phase reaction. The interfacial stress of the two phases is determined by the lattice change rate before and after the process of lithium intercalation-deintercalation. The smaller the lattice change rate, the smaller the interfacial stress, and the easier Li⁺ transport. Therefore, reducing the lattice change rate of the inner core will be beneficial to enhance the transport ability of Li⁺, thereby improving the rate performance of the secondary battery. The positive electrode active material with a core-shell structure described in the present application can achieve a lattice change rate of less than 4% before and after the process of lithium intercalation-deintercalation, so the use of the positive electrode active material can improve the rate performance of the secondary battery. The lattice change rate may be measured with a method known in the art, e.g., X-ray diffraction (XRD).

In some embodiments, the Li/Mn antisite defect concentration of the positive electrode active material with a core-shell structure is no more than 4%, optionally no more than 2.2%, more optionally 1.5-2.2%.

The so-called Li/Mn antisite defect described in the present application means that the positions of Li⁺ and Mn²⁺ have been exchanged in the LiMnPO₄ lattices. Correspondingly, the Li/Mn antisite defect concentration refers to a percentage of the Li⁺ exchanged with Mn²⁺ based on the total amount of Li⁺. In the present application, the Li/Mn antisite defect concentration can be measured according to JIS K 0131-1996, for example.

The positive electrode active material with a core-shell structure described in the present application can realize the above-mentioned low Li/Mn antisite defect concentration. Although the mechanism is not very clear, the inventors of the present application speculate that Li⁺ and Mn²⁺ may be exchanged in the LiMnPO₄ lattice, and the Li⁺ transport channel is a one-dimensional channel, so Mn²⁺ may be difficult to migrate in the Li⁺ channel, thereby hindering the Li⁺ transport. Thus, the positive electrode active material with a core-shell structure described in the present application has a low Li/Mn antisite defect concentration which is within the above-mentioned range, and then the prevention of transport of Li⁺ by Mn²⁺ can be avoided, and the capacity performance and rate performance of the positive electrode active material can be improved.

In some embodiments, the compacted density of the positive electrode active material at 3T is no less than 2.2 g/cm³, optionally no less than 2.2 g/cm³ and no more than 2.8 g/cm³. A higher compacted density indicates a greater weight of the positive electrode active material per unit volume, and thus, increasing the compacted density is beneficial in increasing the volumetric energy density of the secondary battery. The compacted density may be measured in accordance with GB/T 24533-2009.

In some embodiments, the surface oxygen valence state of the positive electrode active material is no more than -1.90, and optionally -1.90 to -1.98.

The stable valence state of oxygen is -2. The closer the valence is to -2, the stronger the ability of oxygen to obtain electrons, that is, the stronger the oxidizing ability. Usually, the surface valence is below -1.7. In the present application, by limiting the surface oxygen valence state of the positive electrode active material within the above range, the interface side reactions between the positive electrode active material and the electrolyte can be reduced, thereby improving the performance, such as cycling performance and high temperature storage performance, of the secondary battery.

The surface oxygen valence state may be measured with a method known in the art, e.g., electron energy loss spectroscopy (EELS).

### Preparation method

A second aspect of the present application provides a method for preparing a positive electrode active material, including the following steps:
a step to provide an inner core material: the inner core has a chemical formula of Li₁₊ₓMn_{1-y}A_{y}P_{1-z}R_{z}O₄, wherein x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
coating steps: providing an LiₐMP₂O₇ and/or M_{b}(P₂O₇)_{c} and XPO₄ suspension respectively, adding the inner core material to the suspension, mixing and sintering same to obtain the inner core having a first coating layer, a second coating layer and a third coating layer, and coating the resulting inner core having a first coating layer, a second coating layer and a third coating layer with a polymer by a dry method or a wet method to obtain the positive electrode active material, where 0 ≤ a ≤ 2, 1 ≤ b ≤ 4, 1 ≤ c ≤ 6, the values of a, b and c satisfy the following conditions: keeping the crystalline pyrophosphate LiₐMP₂O₇ and/or M_{b}(P₂O₇)_{c} electrically neutral; M is each independently one or more elements selected from Fe, Ni, Mg, Co, Cu, Zn, Ti, Ag, Zr, Nb and Al; X is one or more elements selected from Li, Fe, Ni, Mg, Co, Cu, Zn, Ti, Ag, Zr, Nb and Al; the polymer includes one or more selected from polysiloxane with a linear structure and polysiloxane with a ring structure;
wherein the positive electrode active material has a core-shell structure, which includes the inner core and a shell coating the inner core, and the shell includes a first coating layer coating the inner core, a second coating layer coating the first coating layer, a third coating layer coating the second coating layer, and a fourth coating layer coating the third coating layer, the first coating layer includes crystalline pyrophosphate LiₐMP₂O₇ and/or M_{b}(P₂O₇)_{c}, the second coating layer includes crystalline phosphate XPO₄, the third coating layer is carbon, and the fourth coating layer includes a polymer, and the polymer includes one or more selected from polysiloxane with a linear structure and polysiloxane with a ring structure.

In some embodiments, the step of providing the inner core material comprises the following steps:
Step (1): mixing and stirring a manganese source, an element A dopant, and an acid in a container to obtain manganese salt particles doped with the element A;
Step (2): mixing the manganese salt particles doped with the element A with a lithium source, a phosphorus source and an element R dopant in a solvent to obtain a slurry, and sintering same under the protection of an inert gas atmosphere to obtain an inner core doped with the element A and the element R, wherein the inner core doped with the element A and the element R is Li₁₊ₓMn_{1-y}A_{y}P_{1-z}R_{z}O₄, in which x is any value in a range of -0.100 to 0.100, and y is any value in a range of 0.001 to 0.500, z is any value in a range of 0.001 to 0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S.

The preparation method of the present application has no special limitation on the source of materials, and the source of an element may include one or more of the elementary substance, sulfate, halide, nitrate, organic acid salt, oxide or hydroxide of the element, provided that the source can achieve the purpose of the preparation method of the present application.

In some embodiments, the element A dopant is one or more of the elementary substance, carbonate, sulfate, chloride, nitrate, organic acid salt, oxide, and hydroxide of each of one or more elements selected from Zn, Al, Na, K, Mg, Mo, W, Ti, V, Zr, Fe, Ni, Co, Ga, Sn, Sb, Nb and Ge.

In some embodiments, the element R dopant is one or more of the inorganic acid, subvalent acid, organic acid, sulfate, chloride, nitrate, organic acid salt, oxide, and hydroxide of each of one or more elements selected from B, Si, N and S;
in the present application, the manganese source may be a manganese-containing substance known in the art that can be used to prepare lithium manganese phosphate. As an example, the manganese source may be one or more selected from elemental manganese, manganese dioxide, manganese phosphate, manganese oxalate, and manganese carbonate.

In the present application, the acid may be one or more selected from inorganic acids such as hydrochloric acid, sulfuric acid, nitric acid, phosphoric acid, silicic acid, and subvalent silicic acid, and organic acids such as oxalic acid. In some embodiments, the acid is a dilute organic acid with a concentration of no more than 60 wt%.

In the present application, the lithium source may be a lithium -containing substance known in the art that can be used to prepare lithium manganese phosphate. As an example, the lithium source is one or more selected from lithium carbonate, lithium hydroxide, lithium phosphate, and lithium dihydrogen phosphate.

In the present application, the phosphorus source may be a phosphorus-containing substance known in the art that can be used to prepare lithium manganese phosphate. As an example, the phosphorus source is one or more selected from diammonium hydrogen phosphate, ammonium dihydrogen phosphate, ammonium phosphate and phosphoric acid.

In some embodiments, after the manganese source, the dopant of element A and the acid are reacted in a solvent to obtain a manganese salt suspension doped with element A, the suspension is filtered and oven-dried, and sand-grinded to obtain manganese salt particles doped with element A with a particle size of 50-200 nm.

In some embodiments, the slurry in step (2) is dried to obtain a powder, and then the powder is sintered to obtain an inner core doped with element A and element R.

In some embodiments, in Step (1), the mixing is carried out at a temperature of 20-120°C, optionally 40-120°C.

In some embodiments, in Step (1), the stirring is carried out at 400-700 rpm for 1-9 hours, optionally 3-7 hours.

Optionally, the reaction temperature in the step (1) can be at about 30°C, about 50°C, about 60°C, about 70°C, about 80°C, about 90°C, about 100°C, about 110°C or about 120°C; the stirring in the step (1) is carried out for about 2 hours, about 3 hours, about 4 hours, about 5 hours, about 6 hours, about 7 hours, about 8 hours or about 9 hours; optionally, the reaction temperature and stirring time in the step (1) may be within any range of any of the above-mentioned values.

In some embodiments, in Step (2), the mixing is carried out at a temperature of 20-120°C, optionally 40-120°C, for 1-12 hours. Optionally, the reaction temperature in the step (2) can be at about 30°C, about 50°C, about 60°C, about 70°C, about 80°C, about 90°C, about 100°C, about 110°C or about 120°C; the mixing in the step (2) is carried out for about 2 hours, about 3 hours, about 4 hours, about 5 hours, about 6 hours, about 7 hours, about 8 hours, about 9 hours, about 10 hours, about 11 hours or about 12 hours; optionally, the reaction temperature and mixing time in the step (2) may be within any range of any of the above-mentioned values.

When the temperature and time during the preparation of the inner core particles are within the above-mentioned range, the prepared inner core and the positive electrode active material prepared therefrom have fewer lattice defects, which is beneficial to inhibit the dissolution of manganese ions, and reduce the interfacial side reaction between the positive electrode active material and the electrolyte, thereby improving the cycling performance and the safety performance of the secondary battery.

In some embodiments, optionally, in the process of preparing lithium manganese phosphateparticles doped with element A and element R, the pH of the solution is controlled to be 3.5-6, optionally, the pH of the solution is controlled to be 4-6, more optionally, the pH of the solution is controlled to be 4-5. It should be noted that in the present application, the pH of the resulting mixture can be adjusted by methods commonly used in the art, for example, by adding an acid or a base.

In some embodiments, optionally, in step (2), the molar ratio of the manganese salt particles doped with element A to the lithium source to the phosphorus source is 1 : (0.5-2.1) : (0.5-2.1), more optionally, the molar ratio of the manganese salt particles doped with element A to the lithium source to the phosphorus source is about 1 : 1 : 1.

In some embodiments, optionally, the sintering condition during the preparation of lithium manganese phosphate doped with element A and element R is:
sintering at 600-950°C for 4-10 hours under an atmosphere of inert gas or a mixture of inert gas and hydrogen; optionally, the sintering may be performed at about 650°C, about 700°C, about 750°C, about 800°C, about 850°C or about 900°C for about 2 hours, about 3 hours, about 4 hours, about 5 hours, about 6 hours, about 7 hours, about 8 hours, about 9 hours or about 10 hours; optionally, the sintering temperature and sintering time may be within any range of any of the above-mentioned values. In the process of preparing lithium manganese phosphate doped with element A and element R, if the sintering temperature is too low and the sintering time is too short, then the crystallinity of the inner core of the positive electrode active material may be low, thereby affecting the overall performance, and if the sintering temperature is too high, impurity phases are likely to appear in the inner core of the positive electrode active material, thereby affecting the overall performance; if the sintering time is too long, then the inner core particles of the positive electrode active material may grow larger, thereby affecting the capacity performance, compaction density and rate performance.

In some embodiments, optionally, the protective atmosphere is a mixed gas of 70-90 vol% nitrogen and 10-30 vol% hydrogen.

In some embodiments, the coating step includes:
first coating step: dissolving an element M source, a phosphorus source and an acid, and optionally a lithium source in a solvent to obtain a first coating layer suspension; fully mixing the inner core obtained in the step of providing the inner core material with the first coating layer suspension obtained in the first coating step, drying, and then sintering same to obtain a first coating layer-coated material;
second coating step: dissolving an element X source, a phosphorus source and an acid in a solvent to obtain a second coating layer suspension; fully mixing the first coating layer-coated material obtained in the first coating step with the second coating layer suspension obtained in the second coating step, drying, and then sintering same to obtain a two-layer coating layer-coated material;
third coating step: dissolving a carbon source in a solvent, fully dissolving same to obtain a third coating layer solution; then adding the two-layer coating layer-coated material obtained in the second coating step into the third coating layer solution, uniformly mixing, drying, and then sintering same to obtain a three-layer coating layer-coated material;
fourth coating step: dissolving the polymer in a solvent, fully dissolving same to obtain a fourth coating layer solution; then adding the three-layer coating layer-coated material obtained in the third coating step into the fourth coating layer solution, uniformly mixing, drying to obtain a fourth-layer coating layer-coated material, that is, the positive electrode active material, or mixing the three-layer coating layer-coated material obtained in the third coating step with the polymer uniformly, and then sintering same to obtain a fourth-layer coating layer-coated material, that is, the positive electrode active material.

In some embodiments, the source of the element M is one or more of the elementary substance, carbonate, sulfate, chloride, nitrate, organic acid salt, oxide, and hydroxide of each of one or more elements selected from Fe, Ni, Mg, Co, Cu, Zn, Ti, Ag, Zr, Nb and Al.

In some embodiments, the source of the element X is one or more of the elementary substance, carbonate, sulfate, chloride, nitrate, organic acid salt, oxide, and hydroxide of each of one or more elements selected from Li, Fe, Ni, Mg, Co, Cu, Zn, Ti, Ag, Zr, Nb and Al.

The addition amounts of respective sources of the elements A, R, M, and X depend on a target doping amount, and a ratio of the amounts of the lithium source, the manganese source and the phosphorus source conforms to a stoichiometric ratio.

As an example, the carbon source is one or more selected from starch, surcose, glucose, polyvinyl alcohol, polyethylene glycol and citric acid.

In some embodiments, in the first coating step, the pH of the solution dissolved with an element M source, a phosphorus source and an acid, and optionally a lithium source is controlled to be 3.5-6.5, followed by stirring and reacting for 1-5 h, and then the solution is brought to an increased temperature of 50-120°C and maintained at this temperature for 2-10 h. In some embodiments, in the first coating step, the sintering is carried out at 650-800°C for 2-6 h.

Optionally, in the first coating step, the reaction is performed completely. Optionally, in the first coating step, the reaction is performed for about 1.5 hours, about 2 hours, about 3 hours, about 4 hours, about 4.5 hours or about 5 hours. Optionally, in the first coating step, the reaction time of the reaction may be within any range of any of the above-mentioned values.

Optionally, in the first coating step, the pH of the solution is controlled to be 4-6. Optionally, in the first coating step, the solution is heated to about 55°C, about 60°C, about 70°C, about 80°C, about 90°C, about 100°C, about 110°C or about 120°C, and maintained at that temperature for about 2 hours, about 3 hours, about 4 hours, about 5 hours, about 6 hours, about 7 hours, about 8 hours, about 9 hours, or about 10 hours; optionally, in the first coating step, the heating temperature and maintaining time may be within any range of any of the above-mentioned values.

Optionally, in the first coating step, the sintering may be performed at about 650°C, about 700°C, about 750°C, or about 800°C for about 2 hours, about 3 hours, about 4 hours, about 5 hours or about 6 hours; optionally, the sintering temperature and sintering time may be within any range of any of the above-mentioned values.

In the first coating step, by controlling the sintering temperature and time within the above-mentioned range, the following situations can be effectively avoided: when the sintering temperature is too low and the sintering time is too short in the first coating step, the crystallinity of the first coating layer maybe low, and there may be many amorphous substances, which may lead to a decline in the effect of inhibiting metal dissolution, thereby affecting the cycling performance and the high temperature storage performance of the secondary battery; when the sintering temperature is too high, an impurity phase appears in the first coating layer, the effect of inhibiting metal dissolution may also be affected, thereby affecting the cycling performance and the high temperature storage performance of the secondary battery; when the sintering time is too long, the thickness of the first coating layer may increase, and the migration of Li⁺ may be affected, thereby affecting the capacity performance and the rate performance of the positive electrode active material.

In some embodiments, in the second coating step, after dissolving the element X source, phosphorus source and acid in the solvent, the mixture is stirred and reacted for 1-10 h, then the solution is brought to an increased temperature of 60-150°C and maintained at this temperature for 2-10 h. In some embodiments, in the second coating step, the sintering is carried out at 500-700°C for 6-10 h.

Optionally, in the second coating step, the reaction is performed completely. Optionally, in the second coating step, the reaction is carried out for about 1.5 hours, about 2 hours, about 3 hours, about 4 hours, about 4.5 hours, about 5 hours, about 6 hours, about 7 hours, about 8 hours, about 9 hours or about 10 hours. Optionally, in the second coating step, the reaction time of the reaction may be within any range of any of the above-mentioned values.

Optionally, in the second coating step, the solution is heated to about 65°C, about 70°C, about 80°C, about 90°C, about 100°C, about 110°C, about 120°C, about 130°C, about 140°C or about 150°C and maintained at that temperature for about 2 hours, about 3 hours, about 4 hours, about 5 hours, about 6 hours, about 7 hours, about 8 hours, about 9 hours or about 10 hours; optionally, in the second coating step, the heating temperature and maintaining time may be within any range of any of the above-mentioned values.

In the step of providing the inner core material and the first coating step and the second coating step, before sintering, that is, in the preparation of the inner core material to be subjected to a chemical reaction (steps (1)-(2)) and in the preparation of the first coating layer suspension and the second coating layer suspension, the following situations can be effectively avoided by selecting the appropriate reaction temperature and reaction time as described above: when the reaction temperature is too low, the reaction cannot be started or the reaction rate is slow; when the temperature is too high, the product decomposes or forms a heterogeneous phase; when the reaction time is too long, the particle size of the product is larger, which may increase the time and difficulty of the subsequent process; when the reaction time is too short, the reaction is incomplete and fewer products are obtained.

Optionally, in the second coating step, the sintering may be performed at about 550°C, about 600°C, or about 700°C for about 6 hours, about 7 hours, about 8 hours, about 9 hours or about 10 hours; optionally, the sintering temperature and sintering time may be within any range of any of the above-mentioned values.

In the second coating step, by controlling the sintering temperature and time within the above-mentioned range, the following situations can be effectively avoided: when the sintering temperature is too low and the sintering time is too short in the second coating step, the crystallinity of the second coating layer may be low, and there may be many amorphous substances, and the performance of reducing the reactivity on the surface of the positive electrode active material may be reduced, thereby affecting the cycling performance and the high temperature storage performance of the secondary battery; when the sintering temperature is too high, an impurity phase appears in the second coating layer, and the effect of reducing the reactivity on the surface of the positive electrode active material may also be affected., thereby affecting the cycling performance and the high temperature storage performance of the secondary battery; if the sintering time is too long, the thickness of the second coating layer may increase, and the voltage plateau of the positive electrode active material may be affected, thereby reducing the energy density of the secondary battery.

In some embodiments, in the third coating step, the sintering is carried out at 700-800°C for 6-10 h. Optionally, in the third coating step, the sintering may be performed at about 700°C, about 750°C, or about 800°C for about 6 hours, about 7 hours, about 8 hours, about 9 hours or about 10 hours; optionally, the sintering temperature and sintering time may be within any range of any of the above-mentioned values.

In the third coating step, by controlling the sintering temperature and time within the above-mentioned range, the following situations can be effectively avoided: when the sintering temperature in the third coating step is too low, the degree of graphitization of the third coating layer may decrease, and the electrical conductivity is affected, thereby affecting the capacity performance of the positive electrode active material; when the sintering temperature is too high, the degree of graphitization of the third coating layer may be too high, and the transport of Li⁺ is affected, thereby affecting the capacity performance of the positive active material, etc.; when the sintering time is too short, the coating layer may be too thin, and the conductivity may be affected, thereby affecting the capacity performance of the positive electrode active material; when the sintering time is too long, the coating layer may be too thick, and the compaction density of the positive electrode active material may be affected.

In the above-mentioned first coating step, second coating step, and third coating step, the drying can be carried out at 100°C to 200°C, optionally 110°C to 190°C, and more preferably 120°C to 180°C, even more preferably 120°C to 170°C, most preferably 120°C to 160°C drying temperature, and the drying time can be 3-9 hours, optionally 4-8 hours, more optionally 5-7 hours, most optionally about 6 hours.

In some embodiments, the drying in the fourth coating step (wet coating process) can be carried out at 100°C to 200°C, optionally 110°C to 190°C, and more preferably 120°C to 180°C, even more preferably 120°C to 170°C, most preferably 120°C to 160°C drying temperature, and the drying time is 3-9 hours, optionally 4-8 hours, more optionally 5-7 hours, most optionally about 6 hours.

In some embodiments, the sintering in the fourth coating step (dry coating process) may be performed at 200-300°C for 4-10 hours. Optionally, in the fourth coating step, the sintering may be performed at about 200°C, about 250°C, or about 300°C for about 4 hours, about 6 hours, about 8 hours or about 10 hours; optionally, the sintering temperature and sintering time may be within any range of any of the above-mentioned values.

In the fourth coating step, by controlling the sintering temperature and time within the above-mentioned range, the following situations can be effectively avoided: when the sintering temperature is too low or the sintering time is too short in the fourth coating step, the combination of the fourth coating layer and the third coating layer is not close enough; when the sintering temperature is too high or the sintering time is too long, the polymer in the fourth coating layer may be carbonized and cannot remove F-containing ions in the electrolyte.

The positive electrode active material prepared by the preparation method of the positive electrode active material described in the present application, the secondary battery prepared therefrom has a reduced dissolution amount of Mn and Mn-site doping elements after cycling, and the high temperature storage performance, cycling performance and rate performance are improved. In addition, the source of raw materials is extensive, the cost is low, and the process is simple, which are conducive to industrialization.

### Positive electrode plate

A third aspect of the present application provides a positive electrode plate, comprising a positive electrode current collector and a positive electrode film layer provided on at least one surface of the positive electrode current collector, the positive electrode film layer comprising the positive electrode active material of the first aspect of the present application or the positive electrode active material prepared by the method of the second aspect of the present application, and the content of the positive electrode active material in the positive electrode film layer being 90-99.5 wt%, based on the total weight of the positive electrode film layer. The positive electrode current collector has two opposite surfaces in the thickness direction thereof, and the positive electrode film layer is provided on either or both of the two opposite surfaces of the positive electrode current collector.

In some embodiments, the content of the positive electrode active material in the positive electrode film layer is 95 to 99.5 wt%, based on the total weight of the positive electrode film layer.

The positive electrode film layer does not exclude other positive electrode active materials other than the positive electrode active material of the first aspect of the present application or the positive electrode active material prepared by the method of the second aspect of the present application, for example, the positive electrode film layer can also include at least one of lithium transition metal oxides and modified compounds thereof. As an example, the other positive electrode active materials may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof.

In some embodiments, the positive electrode film layer may also optionally comprise a positive electrode conductive agent. In the present application, the type of the positive electrode conductive agent is not particularly limited. As an example, the positive electrode conductive agent includes at least one of superconducting carbon, conductive graphite, acetylene black, carbon black, Ketjen black, carbon dots, carbon nanotubes, graphene and carbon nanofibers.

In some embodiments, the positive electrode film layer may also optionally comprise a positive electrode binder. In the present application, the type of the positive electrode binder is not particularly limited. As an example, the positive electrode binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorinated acrylate resin.

In some embodiments, the positive electrode current collector can be a metal foil or a composite current collector. As an example of the metal foil, aluminum foil can be used. The composite current collector may comprise a polymer material base layer and a metal material layer formed on at least one surface of the polymer material base layer. As an example, the metal material may be selected from at least one of aluminum, an aluminum alloy, nickel, a nickel alloy, titanium, a titanium alloy, silver, and a silver alloy. As an example, the polymer material base layer may be selected from polypropylene (PP), polyethylene terephthalate (PET), polybutylene terephthalate (PBT), polystyrene (PS), polystyrene ethylene (PE) etc.

In some embodiments, the solid-liquid contact angle between the positive electrode film layer and the non-aqueous organic solvent is between 3° and 90°, optionally between 3° and 60°, and further between 10° and 30°. When the contact angle is in an appropriate range, the secondary battery can simultaneously have high energy density and good rate performance, cycling performance and high temperature storage performance, and the following situations can be effectively avoided: when the contact angle is too small, the polymer may not be able to achieve a good coating improvement effect; when the contact angle is too large, the infiltration of the electrolyte of the positive electrode film layer may become worse, thereby affecting the rate performance and the cycling performance of the secondary battery. The solid-liquid contact angle between the positive electrode film layer and the non-aqueous organic solvent has a meaning that is well known in the art, and can be measured by methods known in the art, for example, measured with reference to GBT 30693-2014. An exemplary measuring method comprises the following steps: at room temperature, a non-aqueous organic solvent droplet was dropped on the surface of the positive electrode plate, and its contact angle within 60 seconds was measured by a contact angle measuring instrument. The measuring instrument can use LSA 200 optical contact angle measuring instrument from LAUDA Scientific Company of Germany. The non-aqueous organic solvent may be a non-aqueous organic solvent known in the art for the non-aqueous electrolyte of a secondary battery, and optionally, the non-aqueous organic solvent may be ethylene carbonate (EC).

In some embodiments, the porosity of the positive electrode film layer is 15% to 50%, optionally 15% to 30%. When the porosity is in an appropriate range, the secondary battery can simultaneously have high energy density and good rate performance, cycling performance and high temperature storage performance, and the following situations can be effectively avoided: when the porosity is too low, the infiltration of the electrolyte of the positive electrode film layer may become worse, thereby affecting the rate performance and the cycling performance of the secondary battery; when the porosity is too high, the overall energy density of the secondary battery may be affected. The porosity of the positive electrode film layer has a meaning that is well known in the art, and can be measured by methods known in the art, for example, measured with reference to GB/T 24586-2009.

The positive electrode film layer is usually formed by coating a positive electrode slurry on a positive electrode current collector, and drying and cold pressing same. The positive electrode slurry is usually formed by dispersing the positive electrode active material, an optional conductive agent, an optional binder and any other components in a solvent and stirring same evenly. The solvent may be N-methylpyrrolidone (NMP), but is not limited thereto.

Notably, the positive electrode film layer parameters (such as contact angle, porosity, etc.) given in the present application each refer to a parameter of a positive electrode film layer on a single side of the positive electrode current collector. When the positive electrode film layers are provided on both sides of the positive electrode current collector, the parameters of the positive electrode film layer on either side satisfying the present application are deemed to fall within the scope of protection of the present application.

In addition, for the above-mentioned parameter measurement for the positive electrode film layer, a sample can be taken for measurement during the preparation of a electrode plate or a battery, or a sample can be taken for measurement from a prepared battery.

When the above test samples are taken from the prepared battery, as an example, the sampling can be carried out by the following steps: the battery is discharged (for safety, the battery is generally in a full-discharge state); the battery is disassembled, and the positive electrode plate is taken out and soaked in dimethyl carbonate (DMC) for a period (e.g., 2 h-10 h); and then the positive electrode plate is taken out and dried at a certain temperature and for a certain period of time (for example, at 60°C for 4 hours); after drying, the positive electrode plate is taken out, and at this time, a sample can be taken from the dried positive electrode plate to measure parameters related to the positive electrode film layer mentioned above in the present application.

### Secondary battery

A fourth aspect of the present application provides a secondary battery, comprising a positive electrode plate of the third aspect of the present application.

A secondary battery, also known as a rechargeable battery or an accumulator, refers to a battery of which active materials can be activated by means of charging for reuse of the battery after the battery is discharged. Generally, the secondary battery includes an electrode assembly and an electrolyte, and the electrode assembly includes a positive electrode plate, a negative electrode plate, and a separator. The separator is provided between the positive electrode plate and the negative electrode plate, and mainly prevents positive and negative electrodes from short-circuiting and enables the active ions to pass through. The electrolyte is between the positive electrode plate and the negative electrode plate and functions for active ion conduction.

### [Positive electrode plate]

The positive electrode plate used in the secondary battery of the present application is the positive electrode plate described in any embodiment of the third aspect of the present application.

### [Negative electrode plate]

In some embodiments, the negative electrode plate comprises a negative electrode current collector and a negative electrode film layer that is provided on at least one surface of the negative electrode current collector and comprises a negative electrode active material. For example, the negative electrode current collector has two opposite surfaces in the thickness direction thereof, and the negative electrode film layer is provided on either or both of the two opposite surfaces of the negative electrode current collector.

The negative electrode active material may be a negative electrode active material well known in the art for the secondary battery. As an example, the negative electrode active material includes, but is not limited to, at least one of natural graphite, artificial graphite, soft carbon, hard carbon, silicon-based material, tin-based material, and lithium titanate. The silicon-based material may include at least one of elemental silicon, a silicon oxide, a silicon carbon composite, a silicon nitrogen composite, and a silicon alloy material. The tin-based material may include at least one of elemental tin, a tin oxide, and a tin alloy material. The present application is not limited to these materials, and other well-known conventional materials that can be used as a negative electrode active material for secondary batteries can also be used. These negative electrode active materials may be used alone or in combination of two or more.

In some embodiments, the negative electrode film layer may also optionally comprise a negative electrode conductive agent. In the present application, the type of the negative electrode conductive agent is not particularly limited. As an example, the negative electrode conductive agent can include at least one of superconducting carbon, conductive graphite, acetylene black, carbon black, Ketjen black, carbon dots, carbon nanotubes, graphene and carbon nanofibers.

In some embodiments, the negative electrode film layer may also optionally comprise a negative electrode binder. In the present application, the type of the negative electrode binder is not particularly limited. As an example, the negative electrode binder may include at least one of a styrene-butadiene rubber (SBR), a water-soluble unsaturated resin SR-1B, a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the negative electrode film layer may also optionally comprise other auxiliary agents. As an example, other auxiliary agents may be a thickening agent, for example, sodium carboxymethyl cellulose (CMC), a PTC thermistor material etc.

In some embodiments, the negative electrode current collector can be a metal foil or a composite current collector. As an example of the metal foil, a copper foil can be used. The composite current collector may comprise a polymer material base layer and a metal material layer formed on at least one surface of the polymer material base layer. As an example, the metal material may be selected from at least one of copper, a copper alloy, nickel, a nickel alloy, titanium, a titanium alloy, silver, and a silver alloy. As an example, the polymer material base layer may be selected from polypropylene (PP), polyethylene terephthalate (PET), polybutylene terephthalate (PBT), polystyrene (PS), polystyrene ethylene (PE) etc.

The negative electrode film layer is usually formed by coating a negative electrode slurry on a negative electrode current collector, and drying and cold pressing same. The negative electrode slurry is generally formed by dispersing a negative electrode active material, an optional conductive agent, an optional binder and optional other auxiliary agents, into a solvent and uniformly stirring same. The solvent may be N-methylpyrrolidone (NMP) or deionized water, but is not limited thereto.

The negative electrode plate may comprise other additional functional layers in addition to the negative electrode film layer. For example, in some embodiments, the negative electrode plate of the present application can also comprise a conductive primer (e.g., composed of a conductive agent and a binder) provided between the negative electrode current collector and the negative electrode film layer and disposed on the surface of the negative electrode current collector. In some other embodiments, the negative electrode plate of the present application can also comprise a protective layer covering the surface of the negative electrode film layer.

### [Electrolyte]

The type of the electrolyte is not specifically limited in the present application, and can be selected according to actual requirements. For example, the electrolyte may be selected from at least one of a solid electrolyte and a liquid electrolyte (i.e., electrolyte solution).

In some embodiments, an electrolyte solution is used as the electrolyte and includes an electrolyte salt and a solvent.

The type of the electrolyte salt is not specifically limited, and can be selected according to actual requirements. In some embodiments, as an example, the electrolyte salt may include at least one of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP).

The type of the solvent is not specifically limited, and can be selected according to actual requirements. In some embodiments, as an example, the solvent may comprise at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution further optionally comprises an additive. For example, the additives may comprise negative electrode film-forming additives, positive electrode film-forming additives, and additives that can improve certain performance of the battery, such as additives that improve overcharge performance of the battery, additives that improve high-temperature performance of the battery, and those that improve low-temperature power performance of the battery.

### [Separator]

The secondary battery using an electrolyte solution and some secondary batteries using a solid electrolyte further comprise a separator. The separator is provided between the positive electrode plate and the negative electrode plate, and mainly prevents positive and negative electrodes from short-circuiting and enables the active ions to pass through. The type of the separator is not particularly limited in the present application, and any well known porous-structure separator with good chemical stability and mechanical stability may be selected.

In some embodiments, the material of the separator may include at least one of glass fibers, non-woven fabrics, polyethylene, polypropylene and polyvinylidene fluoride. The separator may be either a single-layer film or a multi-layer composite film. When the separator is a multi-layer composite film, the materials of the respective layers are the same or different.

In some embodiments, the positive electrode plate, the separator and the negative electrode plate can form an electrode assembly by a winding process or a lamination process.

In some embodiments, the secondary battery may comprise an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may be plastics, such as at least one of polypropylene (PP), polybutylene terephthalate (PBT), polybutylene succinate (PBS), etc.

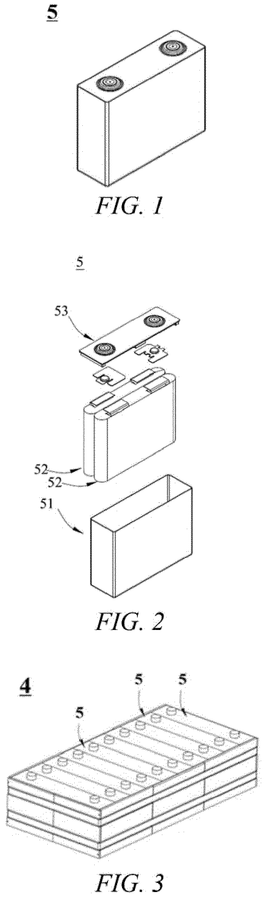

The shape of the secondary battery is not particularly limited in the present application, and may be cylindrical, square or of any other shape. Fig. 1 shows a square secondary battery 5 as an example.

In some embodiments, as shown in Fig. 2, the outer package may comprise a housing 51 and a cover plate 53. The housing 51 may include a bottom plate and side plates connected to the bottom plate, and the bottom plate and the side plates enclose to form an accommodating cavity. The housing 51 has an opening in communication with the accommodating cavity, and the cover plate 53 is used for covering the opening to close the accommodating cavity. The positive electrode plate, the negative electrode plate and the separator can be subjected to a winding process or a stacking process to form an electrode assembly 52. The electrode assembly 52 is packaged in the accommodating cavity. The electrolyte infiltrates the electrode assembly 52. The number of the electrode assemblies 52 contained in the secondary battery 5 may be one or more, and may be adjusted according to requirements.

The method for preparing the secondary battery of the present application are well-known. In some embodiments, the positive electrode plate, the separator, the negative electrode plate, and the electrolyte can be assembled to form a secondary battery. As an example, the positive electrode plate, the separator and the negative electrode plate can be made into an electrode assembly by a winding process or a lamination process, which is placed in an outer package, dried, then injected with an electrolyte solution, subjected to procedures of vacuum packaging, standing, forming, shaping, etc., to obtain a secondary battery.

In some embodiments of the present application, the secondary battery according to the present application can be assembled into a battery module, and the number of the secondary batteries contained in the battery module can be multiple, and the specific number can be adjusted according to the application and capacity of the battery module.

Fig. 3 shows a schematic diagram of a battery module 4 as an example. As shown in Fig. 3, in the battery module 4, a plurality of secondary batteries 5 can be arranged in sequence along the longitudinal direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, and the number of the battery modules contained in the battery pack can be adjusted according to the application and capacity of the battery pack.

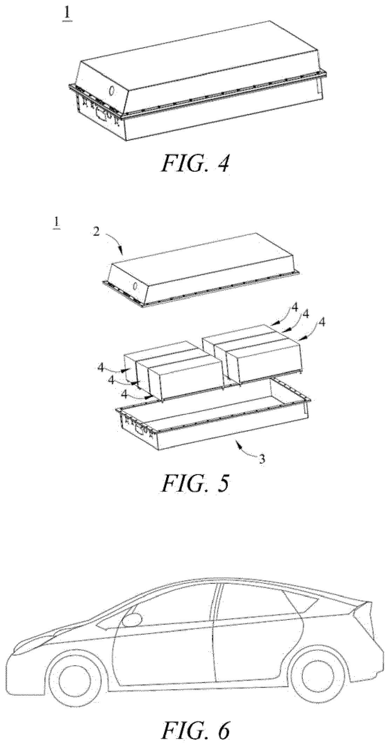

Fig. 4 and Fig. 5 show a schematic diagram of a battery module 1 as an example. As shown in Fig. 4 and Fig. 5, the battery pack 1 can include a battery box and a plurality of battery modules 4 arranged in the battery box. The battery case includes an upper case body 2 and a lower case body 3, and the upper case body 2 is used to cover the lower case body 3 to form a closed space for accommodating the battery modules 4. A plurality of battery modules 4 may be arranged in the battery case in any manner.

### Power consuming device

A fifth aspect of the present application provides a power consuming device comprising at least one of a secondary battery, a battery module , or a battery pack according to the present application. The secondary battery, battery module or battery pack may be used as a power supply of the power consuming device or as an energy storage unit of the power consuming device. The power consuming device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, etc.

The power consuming device may incorporate the secondary battery, battery module or battery pack according to its usage requirements.

Fig. 6 shows a schematic diagram of a power consuming device as an example. The power consuming device may be a pure electric vehicle, a hybrid electric vehicle, a plug-in hybrid electric vehicle or the like. In order to meet the requirements of the power consuming device for a high power and a high energy density, a battery pack or a battery module may be used.

As another example, the power consuming device may be a mobile phone, a tablet, a laptop computer, etc. The power consuming device is generally required to be thin and light, and may use a secondary battery as a power supply.

### Examples

The following examples more specifically describe the content disclosed in the present application, and these examples are only used for explanatory description, because various modifications and transitions within the scope of the present disclosure are obvious to those skilled in the art. Unless otherwise noted, all parts, percentages, and ratios reported in the following examples are on a mass basis, and all reagents used in the examples are commercially available and used directly without further treatment, and the instruments used in the examples are commercially available.

The sources of the raw materials involved in the examples of the present application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCO₃ | Shandong Xiya Chemical Industry Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Materials Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Zhixin Chemical Co., Ltd. | 500 g |
| Vanadium dichloride | VCl₂ | Shanghai Jinjinle Industrial Co., Ltd. | 1 Kg |
| Oxalic acid dihydrate | C₂H₂O₄.2(H₂O) | Shanghai Jinjinle Industrial Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Dilute sulfuric acid | H₂SO₄ | Shenzhen Hisian Biotechnology Co., Ltd. | Mass fraction 60% |
| Dilute nitric acid | HNO₃ | Anhui Lingtian Fine Chemical Co., Ltd. | Mass fraction 60% |
| Siliceous acid | H₂SiO₃ | Shanghai Yuanye Biotechnology Co., Ltd. | 100 g, mass fraction 99.8% |

### I. Preparation of battery

### Example 1

### Step 1: Preparation of a positive electrode active material

### Step S1: Preparation of Fe, Co, V and S co-doped manganese oxalate

689.6 g of manganese carbonate, 455.27 g of ferrous carbonate, 4.65 g of cobalt sulfate and 4.87 g of vanadium dichloride are mixed thoroughly for 6 hours in a mixer. The resulting mixture is then transferred into a reaction kettle, 5 L of deionized water and 1260.6 g of oxalic acid dihydrate are added, heated to 80°C, then stirred thoroughly for 6 hours at a rotation speed of 500 rpm and mixed uniformly until the reaction is completed (no bubbles are generated), so as to obtain an Fe, Co, and V co-doped manganese oxalate suspension. Then, the suspension is filtered, dried at 120°C and then sanded, so as to obtain manganese oxalate particles with a particle size of 100 nm. Step S2: Preparation of inner core Li_{0.997}Mn_{0.60}Fe_{0.393}V_{0.004}Co_{0.003}P_{0.997}S_{0.003}O₄

1793.1 g of manganese oxalate prepared in (1), 368.3 g of lithium carbonate, 1146.6 g of ammonium dihydrogen phosphate and 4.9 g of dilute sulfuric acid are added to 20 L of deionized water, fully stirred, and mixed uniformly and reacted at 80°C for 10 hours to obtain a slurry. The slurry is transferred into a spray drying apparatus for spray-drying granulation, and dried at a temperature of at 250°C to obtain a powder. In a protective atmosphere (90% of nitrogen and 10% of hydrogen), the powder is sintered in a roller kiln at 700°C for 4 hours to obtain the above inner core material.

### Step S3: Preparation of the first coating layer suspension

Preparation of a Li₂FeP₂O₇ solution: 7.4 g of lithium carbonate, 11.6 g of ferrous carbonate, 23.0 g of ammonium dihydrogen phosphate and 12.6 g of oxalic acid dihydrate are dissolved in 500 mL of deionized water, the pH is controlled to be 5, then same is stirred and reacted at room temperature for 2 hours to obtain a solution, and then the solution is heated to 80°C and kept at this temperature for 4 hours to obtain a first coating layer suspension.

### Step S4: Coating of the first coating layer

1571.9 g of doped lithium manganese phosphate inner core material obtained in step S2 is added to the first coating layer suspension (the content of the coating material is 15.7 g) obtained in step S3, fully stirred and mixed for 6 h; after uniformly mixing, same is transferred in an oven at 120°C and dried for 6 h, and then sintered at 650°C for 6 hours to obtain a pyrophosphate coated material.

### Step S5: Preparation of the second coating layer suspension

3.7 g of lithium carbonate, 11.6 g of ferrous carbonate, 11.5 g of ammonium dihydrogen phosphate and 12.6 g of oxalic acid dihydrate are dissolved in 1500 mL of deionized water, then same is stirred and reacted for 6 hours to obtain a solution, and then the solution is heated to 120°C and kept at this temperature for 6 hours to obtain a second coating layer suspension.

### Step S6: Coating of the second coating layer

1586.8 g of the pyrophosphate coated material obtained in step S4 is added to the second coating layer suspension (the content of the coating material is 47.1 g) obtained in step S5, fully stirred and mixed for 6 h; after uniformly mixing, same is transferred in an oven at 120°C and dried for 6 h, and then sintered at 700°C for 8 hours to obtain a two-layer coated material.

### Step S7: Preparation of aqueous solution of the third coating layer

37.3 g of sucrose is dissolved in 500 g of deionized water, then stirred and fully dissolved to obtain an aqueous solution of sucrose.

### Step S8: Coating of the third coating layer

1633.9 g of the two-layer coated material obtained in step S6 is added to the sucrose solution obtained in step S7, stirred together and mixed for 6 h; after uniformly mixing, same is transferred in an oven at 150°C and dried for 6 h, and then sintered at 700°C for 10 hours to obtain a third-layer coated material.

### Step S9: Coating of the fourth coating layer

Hydroxy-terminated polydimethylsiloxane is dissolved in xylene to form a fourth coating solution, then the three-layer coated material obtained in step S8 is added thereto and stirred evenly to form a mixed slurry, then the mixed slurry is placed in a wet coating machine, and dried under a nitrogen atmosphere at 120°C for 4 h, so as to obtain a four-layer coated positive electrode active material. The mass content percentage of the polar functional groups (i.e., -OH) of hydroxy-terminated polydimethylsiloxane is 3.4%, the number-average molecular weight is 1000, and the coating amount is 1% by weight, based on the weight of the three-layer coated material obtained in step S8.

### Step 2: Preparation of positive electrode plate

The four-layer coated positive electrode active material prepared above, a conductive agent acetylene black, a binder polyvinylidene fluoride (PVDF) are added at a weight ratio of 97.0 : 1.2 : 1.8 into N-methylpyrrolidone (NMP), and stirred and uniformly mixed to obtain a positive electrode slurry. The positive electrode slurry is uniformly coated onto an aluminum foil in 0.280 g/1540.25 mm², followed by drying, cold pressing, and slitting to obtain the positive electrode plate.

### Step 3: Preparation of negative electrode plate

The negative active material artificial graphite, hard carbon, the conductive agent acetylene black, the binder styrene butadiene rubber (SBR) and the thickener sodium carboxymethyl cellulose (CMC) are dissolved in the solvent deionized water by a weight ratio of 90 : 5 : 2 : 2 : 1 and stirred and mixed uniformly, and the negative electrode slurry is prepared. The negative electrode slurry is uniformly coated onto a negative electrode current collector copper foil in 0.117 g/1540.25 mm², followed by drying, cold pressing, and slitting to obtain the negative electrode plate.

### Step 4: Preparation of electrolyte solution

In an argon atmosphere glove box (H₂O < 0.1 ppm, and O₂ < 0.1 ppm), the organic solvent ethylene carbonate (EC)/ethyl methyl carbonate (EMC) is mixed uniformly by a volume ratio of 3/7, and 12.5% (on the basis of the weight of the ethylene carbonate/ethyl methyl carbonate solvent) by weight of LiPF₆ is dissolved in the above organic solvent and stirred uniformly to obtain the electrolyte solution.

### Step 5: Preparation of separator

A commercially available PP-PE copolymer microporous film having a thickness of 20 µm and an average pore size of 80 nm (Model 20, from Zhuogao Electronic Technology Co. Ltd.) is used.

### Step 6: Preparation of full battery

The above obtained positive electrode plate, separator and negative electrode plate are stacked in sequence, such that the separator is located between the positive electrode plate and the negative electrode plate to function for isolation, and are then wound to obtain a electrode assembly. The electrode assembly is placed in an outer package, injected with the above electrolyte solution and packaged to obtain a full battery.

### [Preparation of button battery]

The positive electrode active material prepared above, polyvinylidene fluoride (PVDF), and acetylene black were added to N-methylpyrrolidone (NMP) at a weight ratio of 90 : 5 : 5, and stirred in a drying room to form a slurry. An aluminum foil is coated with the above slurry, followed by drying and cold pressing, so as to obtain a positive electrode plate. The coating amount is 0.2 g/cm², and the compacted density is 2.0 g/cm³.

A lithium plate used as the negative electrode, a solution of 1 mol/L of LiPF₆ in ethylene carbonate (EC), diethyl carbonate (DEC) and dimethyl carbonate (DMC) at a volume ratio of 1 : 1 : 1 used the electrolyte solution, and the positive electrode plate prepared above are assembled into a button battery in a button battery box.

### Examples 2 to 29 and comparative examples 1 to 18

The positive electrode active materials and batteries in Examples 2 to 29 and comparative examples 1 to 18 are prepared in a manner similar to Example 1, and the differences in the preparation of positive electrode active materials are shown in the Tables 1-6, wherein in comparative examples 1 to 2, 4 to 10 and 12, the first layers are not coated, so there are no steps S3 and S4; and in comparative examples 1 to 11, the second layers are not coated, so there are no steps SS-S6; in comparative examples 1-18, the fourth layers are not coated, so there are no step S9; the coating amounts of the fourth coating layer in examples 2 to 4 are 2%, 5%, and 8%, respectively, based on weight of the three-layer coated material obtained in step S8; the coating amount of the fourth coating layer in examples 8 to 10 is 2%, based on weight of the three-layer coated material obtained in step S8; the coating amount of the fourth coating layer in examples 5 to 7 and 11 to 29 is 1%, based on weight of the three-layer coated material obtained in step S8.

### Examples 30 to 42

Examples 30 to 42 are carried out in a manner similar to that in example 1, and the differences are shown in Table 7 and Table 8 below, and the coating amount of the fourth coating layer is 1%, based on weight of the three-layer coated material obtained in step S8.

### Examples 43 to 53

Examples 43 to 53 are carried out in a manner similar to that in example 1, and the differences are shown in Table 9 below. In examples 43 to 53, the hydroxyl-terminated polydimethylsiloxane in example 1 was replaced with mercaptopropyl polysiloxane (the polar functional group is -CH₂SH, mass content percentage: 15%, number-average molecular weight: 2,000), aminoethylaminopropyl polydimethylsiloxane (the polar functional group is -CH₂NH₂ and -CH₂NH-, mass content percentage: 12%, number-average molecular weight: 3,700), side-chain polyether-grafted polydimethylsiloxane (the polar functional group is polyether segment, mass content percentage: 7.1%, number-average molecular weight: 15,412), side-chain phosphate-grafted polydimethylsiloxane (the polar functional group is phosphate group, mass content percentage: 1.42%, number-average molecular weight: 15,600), polydimethylsiloxane (polar functional group mass content percentage: 0%, number-average molecular weight: 1,200), polymethylchloropropylsiloxane (the polar functional group is -CH₂Cl, mass content percentage: 30.2%, number-average molecular weight: 2,500), epoxy-terminated polysiloxane (the polar functional group is epoxy, mass content percentage: 0.42%, number-average molecular weight: 10,000), polyether-terminated polydimethylsiloxane (the polar functional group is polyether segment, mass content percentage: 10%, number-average molecular weight: 2,000), 1,3,5,7-octamethylcyclotetrasiloxane (polar functional group mass content percentage: 0%, molecular weight: 280), cyclopentasiloxane (polar functional group mass content percentage: 0%, molecular weight: 370), polyether-terminated polydimethylsiloxane (the polar functional group is polyether segment, mass content percentage: 55%, number-average molecular weight: 25,000).

### Examples 54 to 59

Examples 54 to 59 are carried out in a manner similar to that in example 1, and the differences are shown in Table 9 below. In examples 54 to 59, the coating amount of the hydroxyl-terminated polydimethylsiloxane in example 1 was replaced with 0.01 wt%, 0.1 wt%, 2 wt%, 5 wt%, 10 wt% and 12 wt%, respectively, based on weight of the three-layer coated material obtained in step S8.

### Examples 60 to 66

Examples 60 to 66 are carried out in a manner similar to that in example 1, and the differences are shown in Table 9 below. In examples 60 to 66, the hydroxyl-terminated polydimethylsiloxane in example 1 is replaced with polydimethylsiloxanes with a number-average molecular weight of 400, 10,000, 50,000, 80,000, 100,000, 300,000, and 400,000, respectively.

In addition, in all examples and comparative examples of the present application, if not indicated, the first coating layer material and/or the second coating layer material used are crystalline by default.

**Table 1: Raw materials for the preparation of the inner core**

| No. | Inner core | Raw materials used in step S1 | Raw materials used in step S2 |
|---|---|---|---|
| Comparative examples 1 and 13 | LiMnP04 | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 369.4 g; ammonium dihydrogen phosphate, 1150.1 g; water, 20 L |
| Comparative example 2 | LiMn_{0.60}Fe_{0.40}PO₄ | Manganese carbonate, 689.6 g; ferrous carbonate, 463.4 g; water, 5 L; oxalic acid dihydrate, 1260.6 g; | lorn manganese oxalate dihydrate obtained in step S1 (in C₂O₄Mn_{0.60}Fe_{0.40}•2H₂O), 1793.2 g; lithium carbonate, 369.4 g; ammonium dihydrogen phosphate, 1150.1 g; water, 20 L |
| Comparative example 3 | LiMn_{0.80}Fe_{0.20}PO₄ | Manganese carbonate, 919.4 g; ferrous carbonate, 231.7 g; water, 5 L; oxalic acid dihydrate, 1260.6 g; | lorn manganese oxalate dihydrate obtained in step S1 (in C₂O₄Mn_{0.80}Fe_{0.20}•2H₂O), 1791.4 g; lithium carbonate, 369.4 g; ammonium dihydrogen phosphate, 1150.1 g; water, 20 L |
| Comparative example 4 | LiMn_{0.70}Fe_{0.295}V_{0.005}PO₄ | Manganese carbonate, 804.5 g; ferrous carbonate, 341.8 g; vanadium dichloride, 6.1 g; water, 5 L; oxalic acid dihydrate, 1260.6 g; | Vanadium iron manganese oxalate dihydrate obtained in step S1 (in C₂O₄Mn_{0.70}Fe_{0.295}V_{0.005}•2H₂O), 1792.0 g; lithium carbonate, 369.4 g; ammonium dihydrogen phosphate, 1150.1 g; water, 20 L |
| Comparative examples 5 and 15 | LiMn_{0.60}Fe_{0.395}Mg_{0.005}PO₄ | Manganese carbonate, 689.6 g; ferrous carbonate, 457.6 g; magnesium carbonate, 4.2 g; water, 5 L; oxalic acid dihydrate, 1260.6 g; | Magnesium iron manganese oxalate dihydrate obtained in step S1 (in C₂O₄Mn_{0.60}Fe_{0.395}Mg_{0.005}•2H₂O), 1791.6 g; lithium carbonate, 369.4 g; ammonium dihydrogen phosphate, 1150.1 g; water, 20 L |
| Comparative example 6 | LiMn_{0.60}Fe_{0.35}Ni_{0.05}PO₄ | Manganese carbonate, 689.6 g; ferrous carbonate, 405.4 g; nickel carbonate, 59.3 g; water, 5 L; oxalic acid dihydrate, 1260.6 g; | Nickel manganese oxalate dihydrate obtained in step S1 (in C₂O₄Mn_{0.60}Fe_{0.35}Ni_{0.05}•2H₂O), 1794.6 g; lithium carbonate, 369.4 g; ammonium dihydrogen phosphate, 1150.1 g; water, 20 L |
| Comparative examples 7 and 9 | LiMn_{0.60}Fe_{0.395}V_{0.002}Ni_{0.003} PO₄ | Manganese carbonate, 689.6 g; ferrous carbonate, 457.6 g; vanadium dichloride, 2.4 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.60}Fe_{0.395}V_{0.002}Ni_{0.003}•2H₂O), 1793.2 g; lithium carbonate, 369.4 g; ammonium dihydrogen phosphate, 1150.1 g; water, 20 L |
| Comparative example 8 | LiMn_{0.60}Fe_{0.395}V_{0.002}Mg_{0.003} PO₄ | Manganese carbonate, 689.6 g; ferrous carbonate, 457.6 g; vanadium dichloride, 2.4 g; magnesium carbonate, 2.53 g; water, 5 L; oxalic acid dihydrate, 1260.6 g; | Magnesium vanadium iron manganese oxalate dihydrate obtained in step S1 (in C₂O₄Mn_{0.60}Fe_{0.395}V_{0.002}Mg_{0.003}•2H₂O), 1792.1 g; lithium carbonate, 369.4 g; ammonium dihydrogen phosphate, 1150.1 g; water, 20 L |
| Comparative examples 10-12, comparative examples 16-18 and examples 1-10 | Li_{0.997}Mn_{0.60}Fe_{0.393}V_{0.004}Co_{0 .003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 368.3 g; ammonium dihydrogen phosphate, 1146.6 g; dilute sulfuric acid, 4.9 g; water, 20 L |
| Comparative example 14 | Li_{1.2}MnP_{0.8}Si_{0.2}O₄ | Manganese carbonate, 1149.3 g; water, 5 L; oxalic acid dihydrate, 1260.6 g; | Manganese oxalate dihydrate obtained in step S1 (in C₂O₄Mn•2H₂O), 1789.6 g; lithium carbonate, 443.3 g; ammonium dihydrogen phosphate, 920.1 g; Siliceous acid, 156.2 g; water, 20 L |
| Example 11 | Li_{1.001}Mn_{0.60}Fe_{0.393}V_{0.004}Co_{0 .003}P_{0.999}Si_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.8 g; ammonium dihydrogen phosphate, 1148.9 g; Siliceous acid, 0.8 g; water, 20 L |
| Example 12 | LiMn_{0.60}Fe_{0.393}V_{0.004}Co_{0.003} P_{0.998}N_{0.002}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1147.8 g; dilute nitric acid, 2.7 g; water, 20 L |
| Example 13 | Li_{0.995}Mn_{0.65}Fe_{0.341}V_{0.004}Co_{0 .005}P_{0.995}S_{0.005}O₄ | Manganese carbonate, 747.1 g; ferrous carbonate, 395.1 g; cobalt sulfate, 7.8 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.65}Fe_{0.341}V_{0.004}Co_{0.005}•2H₂O), 1792.7 g; lithium carbonate, 367.6 g; ammonium dihydrogen phosphate, 1144.3 g; dilute sulfuric acid, 8.2 g; water, 20 L |
| Example 14 | Li_{1.002}Mn_{0.70}Fe_{0.293}V_{0.004}Co_{0 .003}P_{0.998}Si_{0.002}O₄ | Manganese carbonate, 804.6 g; ferrous carbonate, 339.5 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.70}Fe_{0.293}V_{0.004}Co_{0.003}•2H₂O), 1792.2 g; lithium carbonate, 370.2 g; 1147.8; Siliceous acid, 1.6 g; water, 20 L |
| Examples 15 and 17 | LiMn_{0.60}Fe_{0.393}V_{0.004}Co_{0.003} P_{0.999}N_{0.001}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 369.4 g; ammonium dihydrogen phosphate, 1148.9 g; dilute nitric acid, 1.4 g; water, 20 L |
| Example 16 | Li_{0.997}Mn_{0.60}Fe_{0.393}V_{0.004}Co_{0 .003}P_{0.997}S_{0.003}O₄ | Manganese carbonate, 689.6 g; ferrous carbonate, 455.3 g; cobalt sulfate, 4.7 g; vanadium dichloride, 4.9 g; water, 5 L; oxalic acid dihydrate, 1260.6 g; | Cobalt vanadium iron manganese oxalate dihydrate obtained in step S1 (in C₂O₄Mn_{0.60}Fe_{0.393}V_{0.004}Co_{0.003}•2H₂O), 1793.1 g; lithium carbonate, 368.7 g; ammonium dihydrogen phosphate, 1146.6 g; dilute sulfuric acid, 4.9 g; water, 20 L |
| Example 18 | LiMn_{0.60}Fe_{0.393}V_{0.004}Mg_{0.003} P_{0.995}N_{0.005}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O), 1791.1 g; lithium carbonate, 369.4 g; ammonium dihydrogen phosphate, 1144.3 g; dilute nitric acid, 7.0 g; water, 20 L |
| Example 19 | Li₀₉₉₉Mn_{0.60}Fe_{0.393}V_{0.004}Mg _{0.003}P_{0.999}S_{0.001}O₄ | Manganese carbonate, 689.6 g; ferrous carbonate, 455.3 g; magnesium carbonate, 2.5 g; vanadium dichloride, 4.9 g; water, 5 L; oxalic acid dihydrate, 1260.6 g; | Magnesium vanadium iron manganese oxalate dihydrate obtained in step S1 (in C₂O₄Mn_{0.60}Fe_{0.393}V_{0.004}Mg_{0.003}•2H₂O), 1791.1 g; lithium carbonate, 369.0 g; ammonium dihydrogen phosphate, 1148.9 g; dilute sulfuric acid, 1.6 g; water, 20 L |
| Example 20 | Li_{0.998}Mn_{0.60}Fe_{0.393}V_{0.004}Ni_{0. 003}P_{0.998}S_{0.002}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1792.2 g; lithium carbonate, 368.7 g; ammonium dihydrogen phosphate, 1147.8 g; dilute sulfuric acid, 3.2 g; water, 20 L |
| Examples 21-24 | Li_{1.001}Mn_{0.60}Fe_{0.393}V_{0.004}Ni_{0. .003}P_{0.999}Si_{0.001}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.8 g; ammonium dihydrogen phosphate, 1148.9 g; Siliceous acid, 0.8 g; water, 20 L |
| Example 25 | Li_{1.001}Mn_{0.50}Fe_{0.493}V_{0.004}Ni_{0. .003}P_{0.999}Si_{0.001}O₄ | Manganese carbonate, 574.7 g; ferrous carbonate, 571.2 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.50}Fe_{0.493}V_{0.004}Ni_{0.003}•2H₂O), 1794.0 g; lithium carbonate, 369.8 g; ammonium dihydrogen phosphate, 1148.9 g; Siliceous acid, 0.8 g; water, 20 L |
| Example 26 | Li_{1.001}Mn_{0.999}Fe_{0.001}P_{0.999}Si_{0. 001}O₄ | Manganese carbonate, 1148.2 g; ferrous carbonate, 1.2 g; water, 5 L; oxalic acid dihydrate, 1260.6 g; | lorn manganese oxalate dihydrate obtained in step S1 (in C₂O₄Mn_{0.999}Fe_{0.001}2H₂O), 1789.6 g; lithium carbonate, 369.8 g; ammonium dihydrogen phosphate, 1148.9 g; Siliceous acid, 0.8 g; water, 20 L |
| Example 27 | LiMn_{0.60}Fe_{0.393}V_{0.004}Ni_{0.003} P_{0.9}N_{0.100}O₄ | Manganese carbonate, 689.6 g; ferrous carbonate, 455.3 g; nickel carbonate, 3.6 g; vanadium dichloride, 4.9 g; water, 5 L; oxalic acid dihydrate, 1260.6 g; | Nickel vanadium iron manganese oxalate dihydrate obtained in step S1 (in C₂O₄Mn_{0.60}Fe_{0.393}V_{0.004}Ni_{0.003}•2H₂O), 1793.1 g; lithium carbonate, 369.4 g; ammonium dihydrogen phosphate, 1035.1 g; dilute nitric acid, 140.0 g; water, 20 L |
| Example 28 | Li_{1.001}Mn_{0.40}Fe_{0.593}V_{0.004}Ni_{0. .003}P_{0.999}Si_{0.001}O₄ | Manganese carbonate, 459.7 g; ferrous carbonate, 686.9 g; vanadium dichloride, 4.8 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.593}V_{0.004}Ni_{0.003}•2H₂O), 1794.9 g; lithium carbonate, 369.8 g; ammonium dihydrogen phosphate, 1148.9 g; Siliceous acid, 0.8 g; water, 20 L |
| Example 29 | Li_{1.001}Mn_{0.40}Fe_{0.393}V_{0.204}Ni_{0. 003}P_{0.999}Si_{0.001}O₄ | Manganese carbonate, 459.7 g; ferrous carbonate, 455.2 g; vanadium dichloride, 248.6 g; nickel carbonate, 3.6 g; water, 5 L; oxalic acid dihydrate, 1260.6 g; | Nickel vanadium iron manganese oxalate dihydrate obtained in step S1 (in C₂O₄Mn_{0.40}Fe_{0.393}V_{0.204}Ni_{0.003}•2H₂O), 1785.1 g; lithium carbonate, 369.8 g; ammonium dihydrogen phosphate, 1148.9 g; Siliceous acid, 0.8 g; water, 20 L |

**Table 2: Preparation of the first coating layer suspension (step S3)**

| No. | Coating material of the first coating layer | Preparation of the first coating layer suspension |
|---|---|---|
| Comparative examples 3 and 16 | Amorphous Li₂FeP₂O₇ | 7.4 g of lithium carbonate; 11.6 g of ferrous carbonate; 23.0 g of ammonium dihydrogen phosphate; 12.6 g of oxalic acid dihydrate; controlling the pH to be 5 |
| Comparative Examples 11, 13-15 and 17-18; | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; controlling the pH to be 5 |
| Examples 1-14, 19 and 21-29 | | |
| Example 15-16 | Crystalline Al₄(P₂O₇)₃ | 53.3 g of aluminum chloride; 34.5 g of ammonium dihydrogen phosphate; 18.9 g of oxalic acid dihydrate; controlling the pH to be 4 |
| Examples 17-18 and 20 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; controlling the pH to be 5 |

**Table 3: Coating of the first coating layer (step S4)**

| No. | Coating material of the first coating layer and the amount thereof (based on the weight of the inner core) | Amount of the inner core added in step S4 | Step S4: Coating of the second coating layer | | | | |
|---|---|---|---|---|---|---|---|
| | | | Amount of the corresponding coating material in the first coating layer suspension | Mixing time (hours) | Drying temperature (°C) | Sintering temperature (°C) | Sintering time (hours) |
| Comparative example 3 | 2% of amorphous Li₂FeP₂O₇ | 1570.4 g | 31.4 g | 6 | 120 | 500 | 4 |
| Comparative example 11 | 1% of crystalline Li₂FeP₂O₇ | 1571.1 g | 15.7 g | 6 | 120 | 650 | 6 |
| Comparative example 13 | 2% of crystalline Li₂FeP₂O₇ | 1568.5 g | 31.4 g | 6 | 120 | 650 | 6 |
| Comparative example 14 | 2% of crystalline Li₂FeP₂O₇ | 1562.8 g | 31.2 g | 6 | 120 | 650 | 6 |
| Comparative example 15 | 2% of crystalline Li₂FeP₂O₇ | 1570.6 g | 31.4 g | 6 | 120 | 650 | 6 |
| Comparative example 16 | 2% of amorphous Li₂FeP₂O₇ | 1571.1 g | 31.4 g | 6 | 120 | 500 | 4 |
| Comparative example 17 | 2% of crystalline Li₂FeP₂O₇ | 1571.1 g | 31.4 g | 6 | 120 | 650 | 6 |
| Comparative example 18 | 1% of crystalline Li₂FeP₂O₇ | 1571.9 g | 15.7 g | 6 | 120 | 650 | 6 |
| Examples 1-4 and 8-10 | 1% of crystalline Li₂FeP₂O₇ | 1571.9 g | 15.7 g | 6 | 120 | 650 | 6 |
| Example 5 | 2% of crystalline Li₂FeP₂O₇ | 1571.9 g | 31.4 g | 6 | 120 | 650 | 6 |
| Example 6 | 3% of crystalline Li₂FeP₂O₇ | 1571.1 g | 47.1 g | 6 | 120 | 650 | 6 |
| Example 7 | 5% of crystalline Li₂FeP₂O₇ | 1571.9 g | 78.6 g | 6 | 120 | 650 | 6 |
| Example 11 | 1% of crystalline Li₂FeP₂O₇ | 1572.1 g | 15.7 g | 6 | 120 | 650 | 6 |
| Example 12 | 1% of crystalline Li₂FeP₂O₇ | 1571.7 g | 15.7 g | 6 | 120 | 650 | 6 |
| Example 13 | 2% of crystalline Li₂FeP₂O₇ | 1571.4 g | 31.4 g | 6 | 120 | 650 | 6 |
| Example 14 | 2.5% of crystalline Li₂FeP₂O₇ | 1571.9 g | 39.3 g | 6 | 120 | 650 | 6 |
| Example 15 | 2% of crystalline Al₄(P₂O₇)₃ | 1571.9 g | 31.4 g | 6 | 120 | 680 | 8 |
| Example 16 | 3% of crystalline Al₄(P₂O₇)₃ | 1571.9 g | 47.2 g | 6 | 120 | 680 | 8 |
| Example 17 | 1.5% of crystalline Li₂NiP₂O₇ | 1571.9 g | 23.6 g | 6 | 120 | 630 | 6 |
| Example 18 | 1% of crystalline Li₂NiP₂O₇ | 1570.1 g | 15.7 g | 6 | 120 | 630 | 6 |
| Example 19 | 2% of crystalline Li₂FeP₂O₇ | 1571.0 g | 31.4 g | 6 | 120 | 650 | 6 |
| Example 20 | 1% of crystalline Li₂NiP₂O₇ | 1571.9 g | 15.7 g | 6 | 120 | 630 | 6 |
| Examples 21-24 | 2% of crystalline Li₂FeP₂O₇ | 1572.1 g | 31.4 g | 6 | 120 | 650 | 6 |
| Example 22 | 5.50% of crystalline Li₂FeP₂O₇ | 1572.1 g | 86.5 g | 6 | 120 | 650 | 6 |
| Example 25 | 1% of crystalline Li₂FeP₂O₇ | 1573.0 g | 15.7 g | 6 | 120 | 650 | 6 |
| Example 26 | 1% of crystalline Li₂FeP₂O₇ | 1568.6 g | 15.7 g | 6 | 120 | 650 | 6 |
| Example 27 | 1% of crystalline Li₂FeP₂O₇ | 1569.2 g | 15.7 g | 6 | 120 | 650 | 6 |
| Example 28 | 2% of crystalline Li₂FeP₂O₇ | 1573.9 g | 31.4 g | 6 | 120 | 650 | 6 |
| Example 29 | 2% of crystalline Li₂FeP₂O₇ | 1564.1 g | 31.2 g | 6 | 120 | 650 | 6 |

**Table 4: Preparation of the second coating layer suspension (step S5)**

| No. | Second coating layer material | Step S5: Preparation of the second coating layer suspension |
|---|---|---|
| Comparative examples 12 and 18; Examples 1-14, 18-19 and 25-27 | Crystalline LiFePO₄ | 3.7 g of lithium carbonate; 11.6 g of ferrous carbonate; 11.5 g of ammonium dihydrogen phosphate; 12.6 g of oxalic acid dihydrate |
| Comparative examples 13-16; Examples 15, 17, 20, 21-24 and 28-29 | Crystalline LiCoPO₄ | 3.7 g of lithium carbonate; 15.5 g of cobalt sulfate; 11.5 g of ammonium dihydrogen phosphate; 12.6 g of oxalic acid dihydrate |
| Comparative example 17 | Amorphous LiCoPO₄ | 3.7 g of lithium carbonate; 15.5 g of cobalt sulfate; 11.5 g of ammonium dihydrogen phosphate; 12.6 g of oxalic acid dihydrate |
| Example 16 | Crystalline LiNiPO₄ | 3.7 g of lithium carbonate; 11.9 g of nickel carbonate; 11.5 g of ammonium dihydrogen phosphate; 12.6 g of oxalic acid dihydrate |

**Table 5: Coating of the second coating layer (step S6)**

| No. | Second coating layer material and the amount thereof (based on the weight of the inner core) | Amount of the pyrophospha te-coated material added in step S6 (g) | Step S6: Coating of the second coating layer | | | | |
|---|---|---|---|---|---|---|---|
| | | | Amount of the corresponding coating material in the second coating layer suspension (g) | Mixing time (hours) | Drying temperature (°C) | Sintering temperature (°C) | Sintering Time (hours) |
| Comparative example 12 | 3% of crystalline LiFePO₄ | 1571.1 | 47.1 | 6 | 120 | 700 | 8 |
| Comparative example 13 | 4% of crystalline LiCoPO₄ | 1599.9 | 62.7 | 6 | 120 | 750 | 8 |
| Comparative example 14 | 4% of crystalline LiCoPO₄ | 1594.0 | 62.5 | 6 | 120 | 750 | 8 |
| Comparative example 15 | 4% of crystalline LiCoPO₄ | 1602.0 | 62.8 | 6 | 120 | 750 | 8 |
| Comparative example 16 | 4% of crystalline LiCoPO₄ | 1602.5 | 62.8 | 6 | 120 | 750 | 8 |
| Comparative example 17 | 4% of amorphous LiCoPO₄ | 1602.5 | 62.8 | 6 | 120 | 650 | 8 |
| Comparative example 18 | 3% of crystalline LiFePO₄ | 1586.8 | 47.1 | 6 | 120 | 700 | 8 |
| Examples 1-4 | 3% of crystalline LiFePO₄ | 1586.8 | 47.1 | 6 | 120 | 700 | 8 |
| Example 5 | 3% of crystalline LiFePO₄ | 1602.5 | 47.1 | 6 | 120 | 700 | 8 |
| Example 6 | 3% of crystalline LiFePO₄ | 1618.2 | 47.1 | 6 | 120 | 700 | 8 |
| Example 7 | 3% of crystalline LiFePO₄ | 1649.6 | 47.1 | 6 | 120 | 700 | 8 |
| Example 8 | 1% of crystalline LiFePO₄ | 1586.8 | 15.7 | 6 | 120 | 700 | 8 |
| Example 9 | 4% of crystalline LiFePO₄ | 1586.8 | 62.8 | 6 | 120 | 700 | 8 |
| Example 10 | 5% of crystalline LiFePO₄ | 1586.8 | 78.6 | 6 | 120 | 700 | 8 |
| Example 11 | 2.50% of crystalline LiFePO₄ | 1587.8 | 39.3 | 6 | 120 | 700 | 8 |
| Example 12 | 3% of crystalline LiFePO₄ | 1587.4 | 47.2 | 6 | 120 | 700 | 8 |
| Example 13 | 2% of crystalline LiFePO₄ | 1602.8 | 31.4 | 6 | 120 | 700 | 8 |
| Example 14 | 3.50% of crystalline LiFePO₄ | 1610.5 | 55.0 | 6 | 120 | 700 | 8 |
| Example 15 | 2.5% of crystalline LiCoPO₄ | 1603.3 | 39.3 | 6 | 120 | 750 | 8 |
| Example 16 | 3% of crystalline LiNiPO₄ | 1619.0 | 47.2 | 6 | 120 | 680 | 8 |
| Example 17 | 2.5% of crystalline LiCoPO₄ | 1595.5 | 39.3 | 6 | 120 | 750 | 8 |
| Example 18 | 3% of crystalline LiFePO₄ | 1585.9 | 47.1 | 6 | 120 | 700 | 8 |
| Example 19 | 4% of crystalline LiFePO₄ | 1602.4 | 62.8 | 6 | 120 | 700 | 8 |
| Example 20 | 3% of crystalline LiCoPO₄ | 1587.7 | 47.2 | 6 | 120 | 750 | 8 |
| Example 21 | 4% of crystalline LiCoPO₄ | 1603.5 | 62.9 | 6 | 120 | 750 | 8 |
| Example 22 | 4% of crystalline LiCoPO₄ | 1658.6 | 62.9 | 6 | 120 | 750 | 8 |
| Example 23 | 5.50% of crystalline LiCoPO₄ | 1603.5 | 86.5 | 6 | 120 | 750 | 8 |
| Example 24 | 4% of crystalline LiCoPO₄ | 1603.5 | 62.9 | 6 | 120 | 750 | 8 |
| Example 25 | 3% of crystalline LiFePO₄ | 1588.7 | 47.2 | 6 | 120 | 700 | 8 |
| Example 26 | 3% of crystalline LiFePO₄ | 1584.3 | 47.1 | 6 | 120 | 700 | 8 |
| Example 27 | 3% of crystalline LiFePO₄ | 1584.9 | 47.1 | 6 | 120 | 700 | 8 |
| Example 28 | 4% of crystalline LiCoPO₄ | 1605.4 | 63.0 | 6 | 120 | 750 | 8 |
| Example 29 | 4% of crystalline LiCoPO₄ | 1605.4 | 63.0 | 6 | 120 | 750 | 8 |
| Note: Comparative example 12 is the amount of the inner core added | | | | | | | |

**Table 6: Coating of the third coating layer (step S8)**

| No. | Third coating layer | Molar ratio of SP2 to SP3 | Amount of two-layer coated material added in step S8 (g) | Step S8: Coating of the third coating layer | | | | |
|---|---|---|---|---|---|---|---|---|
| | | | | Amount of sucrose (g) | Mixing time (hours) | Drying temperature (°C) | Sintering temperature (°C) | Sintering time (hours) |
| Comparative example 1 | 1% of carbon | 2.5 | 1568.5 | 37.3 | 6 | 150 | 650 | 8 |
| Comparative example 2 | 2% of carbon | 2.8 | 1572.2 | 74.7 | 6 | 150 | 680 | 8 |
| Comparative example 3 | 2% of carbon | 2.7 | 1601.8 | 74.6 | 6 | 150 | 680 | 7 |
| Comparative example 4 | 1% of carbon | 2.4 | 1571.0 | 37.3 | 6 | 150 | 630 | 8 |
| Comparative example 5 | 1.5% of carbon | 2.6 | 1570.6 | 56.0 | 6 | 150 | 650 | 7 |
| Comparative example 6 | 2.5% of carbon | 2.8 | 1573.6 | 93.4 | 6 | 150 | 680 | 8 |
| Comparative example 7 | 1% of carbon | 2.7 | 1572.2 | 37.3 | 6 | 150 | 680 | 7 |
| Comparative example 8 | 1.5% of carbon | 2.9 | 1571.1 | 56.0 | 6 | 150 | 680 | 10 |
| Comparative example 9 | 1% of carbon | 2.2 | 1572.2 | 37.3 | 6 | 150 | 600 | 8 |
| Comparative example 10 | 1% of carbon | 2.4 | 1571.1 | 37.3 | 6 | 150 | 630 | 8 |
| Comparative example 11 | 1% of carbon | 2.3 | 1586.8 | 37.3 | 6 | 150 | 620 | 8 |
| Comparative example 12 | 1% of carbon | 2.1 | 1618.2 | 37.3 | 6 | 150 | 600 | 6 |
| Comparative example 13 | 1% of carbon | 2 | 1662.6 | 37.3 | 6 | 120 | 600 | 6 |
| Comparative example 14 | 1% of carbon | 1.8 | 1656.5 | 37.1 | 6 | 120 | 600 | 6 |
| Comparative example 15 | 1% of carbon | 1.7 | 1664.8 | 37.3 | 6 | 100 | 600 | 6 |
| Comparative example 16 | 1% of carbon | 3.1 | 1665.4 | 37.3 | 6 | 150 | 700 | 10 |
| Comparative example 17 | 1% of carbon | 3.5 | 1665.4 | 37.3 | 6 | 150 | 750 | 10 |
| Comparative example 18 | 1% of carbon | 2.2 | 1633.9 | 37.3 | 6 | 150 | 700 | 10 |
| Example 1 | 1% of carbon | 2.2 | 1633.9 | 37.3 | 6 | 150 | 700 | 10 |
| Example 2 | 3% of carbon | 2.3 | 1633.9 | 111.9 | 6 | 150 | 600 | 9 |
| Example 3 | 4% of carbon | 2.1 | 1633.9 | 149.2 | 6 | 150 | 600 | 6 |
| Example 4 | 5% of carbon | 2.4 | 1633.9 | 186.5 | 6 | 150 | 630 | 8 |
| Example 5 | 1% of carbon | 2.5 | 1649.6 | 37.3 | 6 | 150 | 650 | 8 |
| Example 6 | 1% of carbon | 2.5 | 1665.3 | 37.3 | 6 | 150 | 650 | 8 |
| Example 7 | 1% of carbon | 2.4 | 1696.7 | 37.3 | 6 | 150 | 630 | 8 |
| Example 8 | 1% of carbon | 2.3 | 1602.5 | 37.3 | 6 | 150 | 600 | 9 |
| Example 9 | 1% of carbon | 2.2 | 1649.6 | 37.3 | 6 | 150 | 600 | 8 |
| Example 10 | 1% of carbon | 2.2 | 1665.3 | 37.3 | 6 | 150 | 600 | 9 |
| Example 11 | 1.5% of carbon | 2.3 | 1629.0 | 56.1 | 6 | 150 | 600 | 9 |
| Example 12 | 2% of carbon | 2.4 | 1634.6 | 74.7 | 6 | 150 | 630 | 8 |
| Example 13 | 2% of carbon | 2.5 | 1634.2 | 74.6 | 6 | 150 | 650 | 8 |
| Example 14 | 2.5% of carbon | 2.7 | 1665.5 | 93.3 | 6 | 150 | 680 | 7 |
| Example 15 | 2% of carbon | 2.8 | 1642.6 | 74.7 | 6 | 150 | 680 | 8 |
| Example 16 | 1% of carbon | 2.7 | 1666.2 | 37.3 | 6 | 150 | 680 | 7 |
| Example 17 | 1.5% of carbon | 2.3 | 1634.8 | 56.0 | 6 | 150 | 600 | 9 |
| Example 18 | 1% of carbon | 2.6 | 1633.0 | 37.3 | 6 | 150 | 650 | 7 |
| Example 19 | 1.5% of carbon | 2.4 | 1665.2 | 56.0 | 6 | 150 | 630 | 8 |
| Example 20 | 1.5% of carbon | 2.2 | 1634.8 | 56.0 | 6 | 150 | 600 | 9 |
| Example 21 | 1% of carbon | 2.2 | 1666.4 | 37.3 | 6 | 150 | 600 | 9 |
| Example 22 | 1% of carbon | 2.3 | 1721.4 | 37.3 | 6 | 150 | 600 | 9 |
| Example 23 | 1% of carbon | 2.4 | 1690.0 | 37.3 | 6 | 150 | 630 | 8 |
| Example 24 | 5.5% of carbon | 2.6 | 1666.4 | 205.4 | 6 | 150 | 650 | 7 |
| Example 25 | 1% of carbon | 2.4 | 1635.9 | 37.4 | 6 | 150 | 630 | 8 |
| Example 26 | 1% of carbon | 2.3 | 1631.3 | 37.3 | 6 | 150 | 600 | 9 |
| Example 27 | 1.5% of carbon | 2.1 | 1631.9 | 55.9 | 6 | 150 | 600 | 6 |
| Example 28 | 1% of carbon | 0.07 | 1668.3 | 37.4 | 6 | 80 | 600 | 6 |
| Example 29 | 1% of carbon | 13 | 1668.3 | 37.4 | 6 | 150 | 850 | 10 |
| Note: Comparative examples 1-2, 4-10 are the amount of the inner core added, and comparative examples 3 and 11 are the amount of the first layer-coated material added | | | | | | | | |

**Table 7: Investigation of the first coating layer material**

| No. | Coating material of the first coating layer | Preparation of the first coating layer suspension |
|---|---|---|
| Example 30 | Li₂MgP₂O₇ | 7.4 g of lithium carbonate, 8.4 g of magnesium carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 31 | Li₂CoP₂O₇ | 7.4 g of lithium carbonate, 15.5 g of cobalt sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 32 | Li₂CuP₂O₇ | 7.4 g of lithium carbonate, 16.0 g of copper sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 33 | Li₂ZnP₂O₇ | 7.4 g of lithium carbonate, 12.5 g of zinc carbonate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 34 | TiP₂O₇ | 24.0 g of titanium sulfate, 23.0 g of ammonium dihydrogen phosphate and 12.6 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 35 | Ag₄P₂O₇ | 67.9 g of silver nitrate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |
| Example 36 | ZrP₂O₇ | 56.6 g of zirconium sulfate, 23.0 g of ammonium dihydrogen phosphate and 25.2 g of oxalic acid dihydrate are dissolved in 500 mL of deionized water, the pH is controlled to be 5, then same is stirred and fully reacted for 2 h to obtain a solution, and then the solution is heated to 80°C and kept at this temperature for 4 h to obtain a suspension |

**Table 8: Investigation of the second coating layer material**

| No. | Second coating layer material | Preparation of the second coating layer suspension |
|---|---|---|
| Example 37 | Cu₃(PO₄)₂ | 48.0 g of copper sulfate, 23.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example 38 | Zn₃(PO₄)₂ | 37.6 g of zinc carbonate, 23.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example 39 | Ti₃(PO₄)₄ | 72.0 g of titanium sulfate, 46.0 g of ammonium dihydrogen phosphate and 75.6 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example 40 | Ag₃PO₄ | 50.9 g of silver nitrate, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example 41 | Zr₃(PO₄)₄ | 85.0 g of zirconium sulfate, 46.0 g of ammonium dihydrogen phosphate and 37.8 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |
| Example 42 | AlPO₄ | 13.3 g of aluminum chloride, 11.5 g of ammonium dihydrogen phosphate and 18.9 g of oxalic acid dihydrate are dissolved in 1500 mL of deionized water, then same is stirred and fully reacted for 6 h to obtain a solution, and then the solution is heated to 120°C and kept at this temperature for 6 h to obtain a suspension |

**Table 9: Investigation of the fourth coating layer**

| No. | Fourth coating layer | | | |
|---|---|---|---|---|
| | Polymer | Polar functional group content α | Number-average molecular weight | Coating amount |
| Example 1 | Hydroxy -terminated polydimethylsiloxane | 3.4% | 1000 | 1% |
| Example 43 | Mercaptopropyl polysiloxane | 15.0% | 2000 | 1% |
| Example 44 | Aminoethylaminopropyl polydimethylsiloxane | 12.0% | 3700 | 1% |
| Example 45 | Side-chain polyether-grafted polydimethylsiloxane | 7.1% | 15412 | 1% |
| Example 46 | Side-chain phosphate-grafted polydimethylsiloxane | 1.42% | 15600 | 1% |
| Example 47 | Polydimethylsiloxane | 0% | 1200 | 1% |
| Example 48 | Polymethylchloropropylsiloxane | 30.2% | 2500 | 1% |
| Example 49 | Epoxy-terminated polysiloxane | 0.42% | 10000 | 1% |
| Example 50 | Polyether-terminated polydimethylsiloxane | 10.0% | 2000 | 1% |
| Example 51 | 1,3,5,7-octamethylcyclotetrasiloxane | 0% | 280 | 1% |
| Example 52 | Cyclopentasiloxane | 0% | 370 | 1% |
| Example 53 | Polyether-terminated polydimethylsiloxane | 55.0% | 25000 | 1% |
| Example 54 | Hydroxy -terminated polydimethylsiloxane | 3.4% | 1000 | 0.01% |
| Example 55 | Hydroxy -terminated polydimethylsiloxane | 3.4% | 1000 | 0.10% |
| Example 56 | Hydroxy -terminated polydimethylsiloxane | 3.4% | 1000 | 2% |
| Example 57 | Hydroxy -terminated polydimethylsiloxane | 3.4% | 1000 | 5% |
| Example 58 | Hydroxy -terminated polydimethylsiloxane | 3.4% | 1000 | 10% |
| Example 59 | Hydroxy -terminated polydimethylsiloxane | 3.4% | 1000 | 12% |
| Example 60 | Polydimethylsiloxane | 0% | 400 | 1% |
| Example 61 | Polydimethylsiloxane | 0% | 10000 | 1% |
| Example 62 | Polydimethylsiloxane | 0% | 50000 | 1% |
| Example 63 | Polydimethylsiloxane | 0% | 80000 | 1% |
| Example 64 | Polydimethylsiloxane | 0% | 100000 | 1% |
| Example 65 | Polydimethylsiloxane | 0% | 300000 | 1% |
| Example 66 | Polydimethylsiloxane | 0% | 400000 | 1% |

### II. Performance evaluation

### 1. Method for measuring lattice change rate

In a constant-temperature environment at 25°C, a positive electrode active material sample is placed in X-ray powder diffractometer (model: Bruker D8 Discover) and tested at 1°/min, and the test data are organized and analyzed; and with reference to the standard PDF card, lattice constants a0, bO, c0 and v0 at this moment are calculated (aO, b0 and cO represent the lengths of a unit cell on all directions, and v0 represents the volume of the unit cell, which may be obtained directly from XRD refinement results).

By using the method for preparing a button battery in the above-mentioned examples, the positive electrode active material sample was made into a button battery, and the button battery was charged at a small rate of 0.05C until the current was reduced to 0.01C. Then a positive electrode plate in the button battery is taken out and soaked in dimethyl carbonate (DMC) for 8 h. Then the positive electrode plate is dried, powder is scraped off, and particles with a particle size of less than 500 nm are screened out. Sampling is performed, and a cell volume v1 is calculated in the same way as that for testing the fresh sample as described above. (v0 - vl)/v0 x 100% is shown in a table as a lattice change rate (cell volume change rate) of the sample before and after complete lithium intercalation and de-intercalation.

### 2. Li/Mn antisite defect concentration

The XRD results determined in the "Method for measuring lattice change rate" are compared with the PDF (Powder Diffraction File) card of a standard crystal, so as to obtain a Li/Mn antisite defect concentration. Specifically, the XRD results determined in the "Method for measuring lattice change rate" are imported into a general structure analysis system (GSAS) software, and refinement results are obtained automatically, including the occupancies of different atoms; and a Li/Mn antisite defect concentration is obtained by reading the refinement results.

### 3. Compacted density

5 g of positive electrode active material powder prepared above is put into a compaction dedicated mold (U.S. CARVER mold, model: 13 mm), and then the mold is placed on a compacted density instrument. A pressure of 3T (tons) was exerted, the thickness (after pressure relief, the area of the container used for testing is 1540.25 mm²) of the powder under pressure was read from the instrument, and a compacted density was calculated through ρ = m/v.

### 4. Surface oxygen valence state

5 g of a positive electrode active material prepared above is made into a button battery according to the method for preparing a button battery in the above examples. The button battery is charged at a small rate of 0.05C until the current is reduced to 0.01C. Then a positive electrode plate in the button battery is taken out and soaked in DMC for 8 h. Then the positive electrode plate is dried, powder is scraped off, and particles with a particle size of less than 500 nm are screened out. The obtained particles are measured with electron energy loss spectroscopy (EELS, instrument model used: Tales F200S), so as to obtain an energy loss near-edge structure (ELNES) which reflects the density of states and energy level distribution of an element. According to the density of states and energy level distribution, the number of occupied electrons is calculated by integrating the data of valence-band density of states, and then a valence state of surface oxygen after the charging is extrapolated.

### 5. Dissolution test of transition metal Mn (and Fe doping Mn position)

After cycling at 45°C until the capacity is fading to 80%, the full batteries prepared in each of the above Examples and Comparative examples are discharged to a cut-off voltage of 2.0 V at a rate of 0.1C. Then the battery is disassembled, a negative electrode plate is taken out, a round piece of 30 unit areas (1540.25 mm²) is randomly taken from the negative electrode plate, and inductively coupled plasma (ICP) emission spectroscopy is performed with Agilent ICP-OES730. The amounts of Fe (if the Mn position of the positive electrode active material is doped with Fe) and Mn therein are calculated according to the ICP results, and then the dissolution of Mn (and Fe doping the Mn position) after cycling is calculated. The testing standard is in accordance with EPA-6010D-2014.

### 6. Measurement of manganese and phosphorus elements in positive electrode active material

5 g of the positive electrode active material prepared above is dissolved in 100 mL of Lefort (concentrated hydrochloric acid: concentrated nitric acid = 1 : 3). The content of each element in the solution is measured by ICP, and then the content of manganese or phosphorus element is measured and converted (the amount of manganese or phosphorus element/the amount of the positive electrode active material × 100%) to obtain its weight ratio.

### 7. Contact angle test

At room temperature, ethylene carbonate (EC) droplets were dropped on the surface of the positive electrode film layer, and the solid-liquid contact angle was measured within 60 seconds by using an LSA 200 optical contact angle measuring instrument from LAUDA Scientific Company of Germany.

### 8. Measurement of porosity

The positive electrode film layer was peeled off with an adhesive tape, and the porosity of the positive electrode film layer was measured with reference to GB/T 24586-2009. Porosity P = [(V2 - Vl)/V2] × 100%.

V1 (cm³) represents the true volume, which can be measured by using an inert gas with a small molecular diameter (such as helium) by the displacement method, combined with Archimedes' principle and Bohr's law.

V2 (cm³) represents the apparent volume, V2 = S × H × A, S (cm²) represents the area, H (cm) represents the thickness, and A represents the number of samples.

### 9. Method for measuring initial gram capacity of button battery

The button batteries prepared in each of the above examples and comparative examples are charged at 0.1C to 4.3 V, then charged at a constant voltage of 4.3 V until the current is less than or equal to 0.05 mA, allowed to stand for 5 min, and then discharged at 0.1C to 2.0 V; and the discharge capacity at this moment is the initial gram capacity, which is recorded as D0.

### 10. 3C charge constant current rate

Under a constant temperature environment of 25°C, the fresh full batteries prepared in each of the above examples and comparative examples are left to stand for 5 min, and discharged at 1/3C to 2.5 V. The full battery is allowed to stand for 5 min, charged at 1/3C to 4.3 V, and then charged at a constant voltage of 4.3 V until the current is less than or equal to 0.05 mA. The full battery is allowed to stand for 5 min, and the charge capacity at this moment is recorded as C0. The full battery is discharged at 1/3C to 2.5 V, allowed to stand for 5 min, then charged at 3C to 4.3 V, and allowed to stand for 5 min, and the charge capacity at this moment is recorded as C1. The 3C charge constant current rate is C1/C0 × 100%.

A higher 3C charge constant current rate indicates a better rate performance of the second battery.

### 11. Battery expansion test of full battery stored at 60°C for 30 days

The full batteries prepared in each of the above examples and comparative examples are stored at 60°C with 100% state of charge (SOC). Before and after and during the storage, the open-circuit voltage (OCV) and AC internal impedance (IMP) of a battery are measured for monitoring the SOC, and the volume of the battery is measured. Herein, the full battery is taken out after every 48 h of storage, and allowed to stand for 1 h, then the OCV and internal IMP are measured, and the battery volume is measured with the displacement method after the full battery is cooled to room temperature. The displacement method means that the gravity F₁ of the battery is measured separately using a balance of which the on-board data is subjected to automatic unit conversion, then the battery is completely placed in deionized water (with a density known as 1 g/cm³), the gravity F₂ of the battery at this moment is measured, the buoyancy Fbuoyancy on the battery is F₁ - F₂, and then the battery volume V = (F₁ - F₂)/(ρ × g) is calculated according to the Archimedes principle F_{buoyancy} = ρ × g × V_{displaced liquid}.

From the test results of OCV and IMP, the battery of all the example always maintains a SOC of no less than 99% in the experimental process till the end of the storage.

After 30 days of storage, the battery volume is measured, and a percentage increase in battery volume after the storage relative to the battery volume before the storage is calculated.

### 12. Test of cycling performance of full battery at 45°C

In a constant-temperature environment at 45°C, a full battery is charged at 1C to 4.3 V, and then charged at a constant voltage of 4.3 V until the current is ≤ 0.05 mA, allowed to stand for 5 min, then discharged at 1C to 2.5 V, and the capacity is recorded as D0. The above-mentioned process is repeated until the capacity is fading to 80% of DO, and the number of repetitions at this moment is recorded, which is the number of cycles corresponding to the 80% capacity retention rate at 45°C.

### 13. Test of interplanar spacing and angle

1 g of each positive electrode active material powder prepared above is placed in a 50 mL test tube, and 10 mL of alcohol with a mass fraction of 75% is injected into the test tube, then stirred and dispersed for 30 min, and then a clean disposable plastic straw is used to take an appropriate amount of the solution, which is dripped on a 300-mesh copper mesh, at this moment, part of the powder will remain on the copper mesh. The copper mesh and the sample are transferred to TEM (Tales F200s G2) sample chamber for testing, the original picture of the TEM test is obtained.

The original picture obtained from the above TEM test is opened in DigitalMicrograph software, and Fourier transform (automatically completed by the software after the clicking operation) is performed to obtain a diffraction pattern, and the distance from the diffraction spot to the center position in the diffraction pattern is measured to obtain the interplanar spacing, and the angle is calculated according to the Bragg equation.

By comparing the obtained interplanar spacing and corresponding angle data with their standard values, different materials in the coating layer can be identified.

### 14. Test of the coating layer thickness

The test of the coating layer thickness mainly comprises cutting a thin slice with a thickness of about 100 nm from the middle of the single particle of the positive electrode active material prepared above by FIB, and then performing a TEM test on the thin slice to obtain the original picture of the TEM test.

The original picture obtained from the above TEM test is opened in DigitalMicrograph software, the coating layer is be identified with the lattice spacing and angle information, and the thickness of the coating layer is measured.

The thickness is measured at three locations on the selected particle and the average value is taken.

### 15. Determination of the molar ratio of SP2 form to SP3 form of the carbon in the third coating layer

This test is performed by Raman spectroscopy. By splitting the energy spectrum of the Raman test, Id/Ig is obtained, where Id is the peak intensity of SP3-form carbon, and Ig is the peak intensity of SP2-form carbon, thereby determining the molar ratio of the two.

### 16. Determination of the chemical formula of the inner core and the composition of different coating layers

A spherical aberration corrected transmission electron microscope (ACSTEM) was used to characterize the internal microstructure and surface structure of the positive electrode active material with high spatial resolution, and the chemical formula of the inner core of the positive electrode active material and the composition of different coating layers was obtained using three-dimensional reconstruction technology.

Table 10 shows the powder properties of the positive electrode active materials and the performance of the prepared positive electrode plates and batteries in examples 1-29 and comparative examples 1-18.

Table 11 shows the thickness of each coating layer and the weight ratio of manganese to phosphorus of the positive electrode active materials prepared in examples 1-14 and comparative examples 3-4 and 12.

Table 12 shows the powder properties of the positive electrode active materials and the performance of the prepared positive electrode plates and batteries in examples 30-42.

Table 13 shows the interplanar spacings and angle between the first coating layer material and the second coating layer material in examples 1 and 30-42.

Table 14 shows the powder properties of the positive electrode active materials and the performance of the prepared positive electrode plates and batteries in examples 43-66.

**Table 10**

| No. | Lattice change rate (%) | Li/Mn antisite defect concentration (%) | Compacted density (g/cm³) | Surface oxygen valence state | Dissolution of Mn and Fe after cycling (ppm) | Contact angle (°) | Porosity (%) | Capacity of button battery at 0.1C (mAh/g) | 3C charge constant current rate (%) | Expansion of battery when stored at 60°C for 30 d (%) | Number of cycles for capacity retention rate of 80% at 45°C |
|---|---|---|---|---|---|---|---|---|---|---|---|
| Comparative example 1 | 11.4 | 5.2 | 1.5 | -1.55 | 2060 | 0 | 34.2 | 125.6 | 50.1 | 48.6 | 185 |
| Comparative example 2 | 10.6 | 3.3 | 1.67 | -1.51 | 1810 | 1 | 32.9 | 126.4 | 54.9 | 47.3 | 243 |
| Comparative example 3 | 10.8 | 3.4 | 1.64 | -1.64 | 1728 | 0 | 33.2 | 144.7 | 52.1 | 41.9 | 378 |
| Comparative example 4 | 4.3 | 2.8 | 1.69 | -1.82 | 1096 | 2 | 32.6 | 151.2 | 56.3 | 8.4 | 551 |
| Comparative example 5 | 2.8 | 2.5 | 1.65 | -1.85 | 31 | 2 | 33.1 | 148.4 | 58.2 | 7.5 | 668 |
| Comparative example 6 | 3.4 | 2.4 | 1.61 | -1.86 | 64 | 0 | 33.5 | 149.6 | 58.4 | 8.6 | 673 |
| Comparative example 7 | 4.5 | 2.4 | 1.73 | -1.83 | 85 | 2 | 31.5 | 148.6 | 59.2 | 8.3 | 669 |
| Comparative example 8 | 2.3 | 2.4 | 1.68 | -1.89 | 30 | 1 | 32.5 | 152.3 | 59.3 | 7.3 | 653 |
| Comparative example 9 | 2.3 | 2.4 | 1.75 | -1.89 | 30 | 0 | 31.0 | 152.3 | 59.8 | 7.3 | 672 |
| Comparative example 10 | 2.3 | 2.2 | 1.81 | -1.9 | 28 | 1 | 30.2 | 154.2 | 64.1 | 7.2 | 685 |
| Comparative example 11 | 2.3 | 2.2 | 1.92 | -1.92 | 12 | 1 | 28.9 | 154.3 | 65.4 | 5.4 | 985 |
| Comparative example 12 | 2.3 | 2.1 | 1.95 | -1.95 | 18 | 0 | 28.1 | 154.6 | 65.5 | 4.2 | 795 |
| Comparative example 13 | 11.4 | 5.2 | 1.63 | -1.96 | 56 | 1 | 32.9 | 130.2 | 52.4 | 5.4 | 562 |
| Comparative example 14 | 8.1 | 3.8 | 1.76 | -1.96 | 41 | 0 | 30.9 | 135.1 | 58.3 | 5.1 | 631 |
| Comparative example 15 | 2 | 1.8 | 2.13 | -1.96 | 8 | 2 | 27.1 | 154.3 | 61.3 | 3.7 | 1126 |
| Comparative example 16 | 2 | 1.9 | 1.95 | -1.96 | 18 | 0 | 28.2 | 152.7 | 60.5 | 4.5 | 1019 |
| Comparative example 17 | 2 | 1.9 | 1.9 | -1.89 | 24 | 2 | 28.9 | 152.4 | 60.4 | 5.1 | 897 |
| Comparative example 18 | 2.5 | 1.8 | 2.35 | -1.93 | 7 | 1 | 24.1 | 157.2 | 70.3 | 4.2 | 1128 |
| Example 1 | 2.4 | 1.8 | 2.34 | -1.93 | 2 | 16.3 | 25.6 | 157.3 | 70.1 | 4.0 | 1532 |
| Example 2 | 2.5 | 1.8 | 2.24 | -1.94 | 3 | 14.4 | 26.9 | 156.3 | 70.2 | 3.7 | 1650 |
| Example 3 | 2.5 | 1.8 | 2.22 | -1.94 | 2 | 13.8 | 27.5 | 155.4 | 70.1 | 3.4 | 1778 |
| Example 4 | 2.5 | 1.8 | 2.21 | -1.95 | 1 | 12.9 | 28.3 | 153.7 | 70.2 | 2.9 | 1812 |
| Example 5 | 2.5 | 1.8 | 2.33 | -1.93 | 2 | 16.2 | 25.7 | 156.7 | 70.1 | 3.1 | 1900 |
| Example 6 | 2.5 | 1.8 | 2.31 | -1.93 | 2 | 16.4 | 25.6 | 156.2 | 69.7 | 2.8 | 1973 |
| Example 7 | 2.5 | 1.8 | 2.28 | -1.93 | 1 | 16.2 | 26.1 | 155.8 | 68.4 | 2.5 | 2044 |
| Example 8 | 2.5 | 1.8 | 2.29 | -1.93 | 3 | 16.5 | 26.3 | 156.4 | 69.1 | 3.4 | 1450 |
| Example 9 | 2.5 | 1.8 | 2.46 | -1.98 | 2 | 16.3 | 24.0 | 157.6 | 73.4 | 2.9 | 1689 |
| Example 10 | 2.5 | 1.8 | 2.49 | -1.98 | 3 | 16.3 | 23.8 | 157.8 | 75.4 | 2.5 | 1889 |
| Example 11 | 2.6 | 1.9 | 2.38 | -1.97 | 2 | 15.9 | 26.1 | 157.3 | 72.4 | 3.5 | 1420 |
| Example 12 | 2.4 | 1.8 | 2.41 | -1.97 | 1 | 15.1 | 25.1 | 156.3 | 74.5 | 2.5 | 1539 |
| Example 13 | 2.7 | 1.9 | 2.42 | -1.97 | 3 | 15 | 24.9 | 156.6 | 75.3 | 3.5 | 1602 |
| Example 14 | 2.8 | 1.9 | 2.45 | -1.97 | 2 | 14.8 | 25.4 | 153.8 | 76.5 | 3.7 | 1710 |
| Example 15 | 2.2 | 1.9 | 2.46 | -1.97 | 2 | 15.3 | 24.5 | 153.8 | 74.3 | 3.7 | 1512 |
| Example 16 | 2.1 | 1.9 | 2.47 | -1.98 | 2 | 16.4 | 24 | 154.2 | 73.1 | 3.8 | 1530 |
| Example 17 | 2.5 | 1.7 | 2.41 | -1.98 | 1 | 15.8 | 24.9 | 155.4 | 75.3 | 4.5 | 1652 |
| Example 18 | 2.3 | 1.6 | 2.42 | -1.97 | 2 | 16.3 | 24.6 | 154.3 | 76.1 | 4.7 | 1779 |
| Example 19 | 2.2 | 1.7 | 2.43 | -1.97 | 3 | 15.7 | 25 | 154.3 | 76.8 | 4.7 | 1728 |
| Example 20 | 2.6 | 1.8 | 2.42 | -1.94 | 1 | 15.9 | 25.1 | 153.9 | 75.4 | 3.3 | 1858 |
| Example 21 | 2.4 | 1.7 | 2.41 | -1.97 | 1 | 16.5 | 24.5 | 154.5 | 76.1 | 3.5 | 1727 |
| Example 22 | 2.4 | 1.8 | 2.32 | -1.95 | 1 | 16.4 | 25.4 | 152.1 | 72.1 | 2.7 | 1956 |
| Example 23 | 2.3 | 1.7 | 2.46 | -1.96 | 2 | 16.3 | 23.9 | 151.4 | 76.4 | 2.4 | 2045 |
| Example 24 | 2.2 | 1.8 | 2.47 | -1.95 | 2 | 12.1 | 26.3 | 152.1 | 76.3 | 2.5 | 1948 |
| Example 25 | 2.1 | 1.7 | 2.49 | -1.98 | 2 | 16.2 | 23.7 | 158.6 | 78.4 | 2.9 | 1938 |
| Example 26 | 3.6 | 2.5 | 2.21 | -1.97 | 4 | 16.4 | 25.9 | 152.3 | 56.4 | 4.8 | 1415 |
| Example 27 | 2.8 | 2.1 | 2.24 | -1.98 | 3 | 15.8 | 26.5 | 155.4 | 74.3 | 3.8 | 1526 |
| Example 28 | 2.5 | 1.9 | 1.95 | -1.94 | 5 | 16.4 | 28.2 | 154.9 | 54.7 | 6.4 | 1380 |
| Example 29 | 2.4 | 1.8 | 1.98 | -1.95 | 3 | 16.3 | 27.9 | 155.6 | 68.4 | 4.5 | 1447 |

**Table 11**

| No. | Inner core | First coating layer | Second coating layer | Third coating layer | Coating amount of the fourth coating layer | Thickness of the first coating layer (nm) | Thickness of the second coating layer (nm) | Thickness of the third coating layer (nm) | Thickness of the fourth coating layer (nm) | Mn element content (weight %) | Weight ratio of Mn element to P element |
|---|---|---|---|---|---|---|---|---|---|---|---|
| Comparative example 3 | LiMn_{0.80}Fe_{0.20}PO₄ | 2% of amorphous Li₂FeP₂O₇ | - | 2% of carbon | - | 4 | - | 10 | - | 26.1 | 1.383 |
| Comparative example 4 | LiMn_{0.70}Fe_{0.295}V_{0.00 5}PO₄ | - | - | 1% of carbon | - | - | - | 5 | - | 24.3 | 1.241 |
| Comparative example 12 | Li_{0.999}Mn_{0.60}Fe_{0.393} V_{0.004}Co_{0.003}P_{0.999}S_{0 .001}O₄ | - | 3% of crystalline LiFeP04 | 1% of carbon | - | - | 7.5 | 5 | - | 19.6 | 1.034 |
| Example 1 | Li_{0.997}Mn_{0.60}Fe_{0.393} V_{0.004}Co_{0.003}P_{0.997}S_{0 .003}O₄ | 1% of crystalline Li₂FeP₂O₇ | 3% of crystalline LiFeP04 | 1% of carbon | 1% | 2 | 7.5 | 5 | 4 | 18.9 | 1.023 |
| Example 2 | Li_{0.997}Mn_{0.60}Fe_{0.393} V_{0.004}Co_{0.003}P_{0.997}S_{0 .003}O₄ | 1% of crystalline Li₂FeP₂O₇ | 3% of crystalline LiFeP04 | 3% of carbon | 2% | 2 | 7.5 | 15 | 4.8 | 18.0 | 1.023 |
| Example 3 | Li_{0.997}Mn_{0.60}Fe_{0.393} V_{0.004}Co_{0.003}P_{0.997}S_{0 .003}O₄ | 1% of crystalline Li₂FeP₂O₇ | 3% of crystalline LiFeP04 | 4% of carbon | 5% | 2 | 7.5 | 20 | 6.9 | 17.8 | 1.023 |
| Example 4 | Li_{0.997}Mn_{0.60}Fe_{0.393} V_{0.004}Co_{0.003}P_{0.997}S_{0 .003}O₄ | 1% of crystalline Li₂FeP₂O₇ | 3% of crystalline LiFeP04 | 5% of carbon | 8% | 2 | 7.5 | 25 | 8.2 | 17.7 | 1.023 |
| Example 5 | Li_{0.997}Mn_{0.60}Fe_{0.393} V_{0.004}Co_{0.003}P_{0.997}S_{0 .003}O₄ | 2% of crystalline Li₂FeP₂O₇ | 3% of crystalline LiFeP04 | 1% of carbon | 1% | 4 | 7.5 | 5 | 4 | 18.5 | 1.011 |
| Example 6 | Li_{0.997}Mn_{0.60}Fe_{0.393} V_{0.004}Co_{0.003}P_{0.997}S_{0 .003}O₄ | 3% of crystalline Li₂FeP₂O₇ | 3% of crystalline LiFeP04 | 1% of carbon | 1% | 6 | 7.5 | 5 | 4 | 18.1 | 0.999 |
| Example 7 | Li_{0.997}Mn_{0.60}Fe_{0.393} V_{0.004}Co_{0.003}P_{0.997}S_{0 .003}O₄ | 5% of crystalline Li₂FeP₂O₇ | 3% of crystalline LiFeP04 | 1% of carbon | 1% | 10 | 7.5 | 5 | 4 | 17.5 | 0.975 |
| Example 8 | Li_{0.997}Mn_{0.60}Fe_{0.393} V_{0.004}Co_{0.003}P_{0.997}S_{0 .003}O₄ | 1% of crystalline Li₂FeP₂O₇ | 1% of crystalline LiFeP04 | 1% of carbon | 2% | 2 | 2.5 | 5 | 4.8 | 19.5 | 1.043 |
| Example 9 | Li_{0.997}Mn_{0.60}Fe_{0.393} V_{0.004}Co_{0.003}P_{0.997}S_{0 .003}O₄ | 1% of crystalline Li₂FeP₂O₇ | 4% of crystalline LiFeP04 | 1% of carbon | 2% | 2 | 10 | 5 | 4.8 | 18.4 | 1.014 |
| Example 10 | Li_{0.997}Mn_{0.60}Fe_{0.393} V_{0.004}Co_{0.003}P_{0.997}S_{0 .003}O₄ | 1% of crystalline Li₂FeP₂O₇ | 5% of crystalline LiFeP04 | 1% of carbon | 2% | 2 | 12.5 | 5 | 4.8 | 18.1 | 1.004 |
| Example 11 | Li_{1.001}Mn_{0.60}Fe_{0.393} V_{0.004}Co_{0.003}P_{0.999}Si _{0.001}O₄ | 1% of crystalline Li₂FeP₂O₇ | 2.50% of crystalline LiFeP04 | 1.5% of carbon | 1% | 2 | 6.3 | 7.5 | 4 | 18.9 | 1.026 |
| Example 13 | Li_{0.995}Mn_{0.65}Fe_{0.341} V_{0.004}Co_{0.005}P_{0.995}S_{0 .005}O₄ | 2% of crystalline Li₂FeP₂O₇ | 2% of crystalline LiFeP04 | 2% of carbon | 1% | 4 | 5 | 10 | 4 | 18.6 | 1.108 |
| Example 14 | Li_{1.002}Mn_{0.70}Fe_{0.293} V_{0.004}Co_{0.003}P_{0.998}Si _{0.002}O₄ | 2.5% of crystalline Li₂FeP₂O₇ | 3.50% of crystalline LiFeP04 | 2.5% of carbon | 1% | 5 | 8.8 | 12.5 | 4 | 17.5 | 1.166 |

**Table 12**

| No. | Lattice change rate (%) | Li/Mn antisite defect concentration (%) | Compacted density (g/cm³) | Surface oxygen valence state | Dissolution of Mn and Fe after cycling (ppm) | Contact angle (°) | Porosity (%) | Capacity of button battery at 0.1C (mAh/g) | 3C charge constant current rate (%) | Expansion of battery when stored at 60°C for 30 d (%) | Number of cycles for capacity retention rate of 80% at 45°C |
|---|---|---|---|---|---|---|---|---|---|---|---|
| Example 30 | 2.4 | 1.9 | 2.36 | -1.97 | 6 | 16.5 | 25.3 | 156.2 | 68.7 | 4.8 | 1418 |
| Example 31 | 2.5 | 1.7 | 2.36 | -1.96 | 4 | 16.4 | 25.5 | 155.6 | 70.1 | 4.6 | 1487 |
| Example 32 | 2.5 | 1.7 | 2.38 | -1.97 | 7 | 16.3 | 25.4 | 155.9 | 69.1 | 4.3 | 1458 |
| Example 33 | 2.6 | 1.8 | 2.39 | -1.98 | 10 | 16.2 | 25.6 | 156.2 | 69.4 | 5.3 | 1397 |
| Example 34 | 2.6 | 1.9 | 2.34 | -1.96 | 9 | 16.5 | 25.4 | 156.4 | 71.3 | 4.6 | 1400 |
| Example 35 | 2.4 | 1.7 | 2.36 | -1.94 | 5 | 16.3 | 25.3 | 157.5 | 70.9 | 5.1 | 1502 |
| Example 36 | 2.5 | 1.9 | 2.33 | -1.92 | 9 | 16.4 | 25.7 | 155.8 | 71.6 | 5.4 | 1424 |
| Example 37 | 2.5 | 1.7 | 2.34 | -1.92 | 8 | 16.2 | 25.3 | 156.1 | 68.4 | 4.9 | 1454 |
| Example 38 | 2.4 | 1.9 | 2.33 | -1.95 | 12 | 16.5 | 25.4 | 154.7 | 67.5 | 5.9 | 1354 |
| Example 39 | 2.2 | 1.8 | 2.36 | -1.94 | 10 | 16.5 | 25.2 | 156.4 | 69.4 | 5.7 | 1418 |
| Example 40 | 2.4 | 1.9 | 2.37 | -1.91 | 11 | 16.3 | 25.3 | 155.8 | 71.6 | 5.3 | 1391 |
| Example 41 | 2.6 | 1.9 | 2.38 | -1.94 | 6 | 16.2 | 25.3 | 154.8 | 70.8 | 5.1 | 1373 |
| Example 42 | 2.4 | 1.9 | 2.36 | -1.92 | 5 | 16.4 | 25.4 | 156.8 | 71.5 | 4.2 | 1554 |

**Table 13**

| No. | Interplanar spacing of the first coating layer material (nm) | Included angle of the crystal direction (111) of the first coating layer material (°) | Interplanar spacing of the second coating layer material (nm) | Included angle of the crystal direction (111) of the second coating layer material (°) |
|---|---|---|---|---|
| Example 1 | 0.303 | 29.496 | 0.348 | 25.562 |
| Example 30 | 0.451 | 19.668 | 0.348 | 25.562 |
| Example 31 | 0.297 | 30.846 | 0.348 | 25.562 |
| Example 32 | 0.457 | 19.456 | 0.348 | 25.562 |
| Example 33 | 0.437 | 20.257 | 0.348 | 25.562 |
| Example 34 | 0.462 | 19.211 | 0.348 | 25.562 |
| Example 35 | 0.450 | 19.735 | 0.348 | 25.562 |
| Example 36 | 0.372 | 23.893 | 0.348 | 25.562 |
| Example 37 | 0.303 | 29.496 | 0.374 | 23.789 |
| Example 38 | 0.303 | 29.496 | 0.360 | 24.710 |
| Example 39 | 0.303 | 29.496 | 0.350 | 25.428 |
| Example 40 | 0.303 | 29.496 | 0.425 | 20.885 |
| Example 41 | 0.303 | 29.496 | 0.356 | 24.993 |
| Example 42 | 0.303 | 29.496 | 0.244 | 36.808 |

**Table 14**

| No. | Lattice change rate (%) | Li/Mn antisite defect concentrati on (%) | Compa cted density (g/cm³) | Surface oxygen valence state | Dissolution of Mn and Fe after cycling (ppm) | Contact angle (°) | Porosity (%) | Capacity of button battery at 0.1C (mAh/g) | 3C charge constant current rate (%) | Expansion of battery when stored at 60°C for 30 d (%) | Number of cycles for capacity retention rate of 80% at 45 °C |
|---|---|---|---|---|---|---|---|---|---|---|---|
| Example 1 | 2.4 | 1.8 | 2.34 | -1.93 | 2 | 16.3 | 25.6 | 157.3 | 70.1 | 4.0 | 1532 |
| Example 43 | 2.4 | 1.9 | 2.34 | -1.93 | 3 | 15.9 | 25.4 | 157.4 | 70.1 | 4.1 | 1429 |
| Example 44 | 2.5 | 1.8 | 2.35 | -1.93 | 5 | 15.3 | 24.3 | 157.3 | 70.2 | 4.0 | 1522 |
| Example 45 | 2.4 | 1.9 | 2.34 | -1.93 | 2 | 13.0 | 25.7 | 157.2 | 70.5 | 4.2 | 1475 |
| Example 46 | 2.4 | 1.8 | 2.35 | -1.93 | 5 | 17.0 | 25.1 | 157.1 | 70.1 | 4.1 | 1489 |
| Example 47 | 2.5 | 2.0 | 2.34 | -1.93 | 5 | 19.2 | 26.5 | 157.3 | 70.3 | 4.2 | 1380 |
| Example 48 | 2.4 | 1.9 | 2.33 | -1.93 | 3 | 18.3 | 25.4 | 157.2 | 70.1 | 4.1 | 1399 |
| Example 49 | 2.3 | 1.9 | 2.34 | -1.93 | 3 | 17.9 | 26.2 | 157.3 | 70.1 | 4.2 | 1412 |
| Example 50 | 2.4 | 1.8 | 2.34 | -1.93 | 5 | 17.3 | 25.6 | 157.4 | 70.3 | 4.0 | 1457 |
| Example 51 | 2.3 | 1.8 | 2.33 | -1.93 | 3 | 15.4 | 26.1 | 157.3 | 70.1 | 4.2 | 1329 |
| Example 52 | 2.4 | 2.0 | 2.34 | -1.93 | 2 | 16.5 | 26.9 | 157.1 | 70.4 | 4.0 | 1302 |
| Example 53 | 2.3 | 1.9 | 2.34 | -1.93 | 2 | 2.0 | 25.0 | 157.5 | 70.1 | 4.2 | 1288 |
| Example 54 | 2.4 | 1.8 | 2.34 | -1.93 | 3 | 5.2 | 24.0 | 157.2 | 70.2 | 4.2 | 1279 |
| Example 55 | 2.5 | 2.0 | 2.33 | -1.93 | 3 | 10.6 | 24.7 | 157.2 | 70.1 | 4.1 | 1320 |
| Example 56 | 2.4 | 1.9 | 2.33 | -1.93 | 3 | 17.4 | 25.9 | 157.0 | 69.9 | 4.1 | 1530 |
| Example 57 | 2.3 | 1.8 | 2.34 | -1.93 | 3 | 18.1 | 26.5 | 156.8 | 68.7 | 4.1 | 1509 |
| Example 58 | 2.4 | 2.0 | 2.34 | -1.93 | 3 | 19.5 | 28.5 | 156.0 | 68.1 | 4.1 | 1489 |
| Example 59 | 2.3 | 1.9 | 2.35 | -1.93 | 3 | 22.6 | 30.3 | 155.1 | 67.2 | 4.2 | 1477 |
| Example 60 | 2.4 | 1.8 | 2.34 | -1.93 | 3 | 18.7 | 26.1 | 157.2 | 70.2 | 4.2 | 1351 |
| Example 61 | 2.5 | 1.9 | 2.34 | -1.93 | 3 | 20.1 | 27.9 | 157.3 | 70.1 | 4.1 | 1368 |
| Example 62 | 2.5 | 2.0 | 2.33 | -1.93 | 2 | 21.2 | 28.1 | 157.3 | 70.1 | 4.0 | 1364 |
| Example 63 | 2.4 | 1.9 | 2.33 | -1.93 | 4 | 22.1 | 28.8 | 157.0 | 69.9 | 4.2 | 1357 |
| Example 64 | 2.3 | 1.8 | 2.34 | -1.93 | 5 | 23.2 | 30.3 | 156.8 | 69.0 | 4.2 | 1341 |
| Example 65 | 2.3 | 2.0 | 2.33 | -1.93 | 3 | 23.9 | 31.9 | 156.3 | 68.6 | 4.1 | 1335 |
| Example 66 | 2.3 | 1.8 | 2.35 | -1.93 | 4 | 25.1 | 33.8 | 155.7 | 68.0 | 4.2 | 1311 |

It can be seen from Table 10 that, compared with Comparative examples, these Examples achieve a smaller lattice change rate, a smaller Li/Mn antisite defect concentration, a larger compacted density, and a surface oxygen valence state more closer to -2 valence, less Mn and Fe dissolution after cycling, and better battery performance, such as better high-temperature storage performance and high-temperature cycling performance.

It can be seen from Table 11 that by doping the manganese and phosphorus sites of lithium manganese iron phosphate (containing 35% of manganese and about 20% of phosphorus) and four-layer coating, the manganese element content in the positive electrode active material and the weight content ratio of manganese element to phosphorus element is obviously reduced; in addition, comparing examples 1-14 with comparative examples 3, 4 and 12, combined with Table 10, it can be known that the decrease of manganese and phosphorus elements in the positive electrode active material will lead to the decrease of manganese ions and iron ions dissolution and the improvement of the performance of the secondary battery prepared therefrom.

It can be seen from Table 12 that the use of the first coating layer and the second coating layer containing other elements within the scope of the present application can also obtain a positive electrode active material with good performance and achieve good battery performance results.

It can be seen from Table 13 that the interplanar spacing and angle between the first coating layer and the second coating layer in the present application are both within the scope of the present application.

It can be seen from Table 14 that, in the case of other elements being the same, selecting polysiloxane that satisfies one or more of suitable polar functional group content, number-average molecular weight, and coating amount as the fourth coating layer can further improve the cycling performance and/or the high temperature storage performance of the secondary battery without affecting the energy density and the kinetic performance.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A positive electrode active material with a core-shell structure including an inner core and a shell coating the inner core, wherein
the inner core has a chemical formula of Li₁₊ₓMn_{1-y}A_{y}P_{1-z}R_{z}O₄, in which x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
the values of x, y, and z satisfy the following conditions: keeping the entire inner core electrically neutral;
the shell includes a first coating layer coating the inner core, a second coating layer coating the first coating layer, a third coating layer coating the second coating layer, and a fourth coating layer coating the third coating layer, wherein
the first coating layer includes crystalline pyrophosphate LiₐMP₂O₇ and/or M_{b}(P₂O₇)_{c}, 0 ≤ a ≤ 2, 1 ≤ b ≤ 4, 1 ≤ c ≤ 6, the values of a, b, and c satisfy the following conditions: keeping the crystalline pyrophosphate LiₐMP₂O₇ and/or M_{b}(P₂O₇)_{c} electrically neutral,
M in the crystalline pyrophosphate LiₐMP₂O₇ and M_{b}(P₂O₇)_{c} is each independently one or more elements selected from Fe, Ni, Mg, Co, Cu, Zn, Ti, Ag, Zr, Nb and Al;
the second coating layer includes crystalline phosphate XPO₄, X is one or more elements selected from Li, Fe, Ni, Mg, Co, Cu, Zn, Ti, Ag, Zr, Nb and Al;
the third coating layer is carbon;
and the fourth coating layer includes a polymer, and the polymer includes one or more selected from polysiloxane with a linear structure and polysiloxane with a ring structure.

2. The positive electrode active material according to claim 1, wherein the polymer comprises at least one structural unit represented by formula 1, 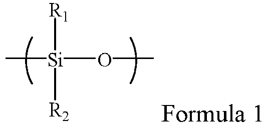
R₁ and R₂ each independently represent H or at least one selected from the group consisting of the following functional groups: -COOH, -OH, -SH, -CN, -SCN, an amino, a phosphate group, a carboxylate group, an amido, an aldehyde group, a sulfonyl, a polyether segment, a C1-C20 aliphatic hydrocarbon group, a C1-C20 halogenated aliphatic hydrocarbon group, a C1-C20 heteroaliphatic hydrocarbon group, a C1-C20 halogenated heteroaliphatic hydrocarbon group, a C6-C20 aromatic hydrocarbon group, a C6-C20 halogenated aromatic hydrocarbon group, a C2-C20 heteroaromatic hydrocarbon group and C2-C20 halogenated heteroaromatic hydrocarbon group;
optionally, R₁ and R₂ each independently represent H or at least one selected from the group consisting of the following functional groups: -OH, -SH, an amino, a phosphate group, a polyether segment, a C1-C8 alkyl, a C1-C8 haloalkyl, a C1-C8 heteroalkyl, a C1-C8 halogenated heteroalkyl, a C2-C8 alkenyl and a C2-C8 haloalkenyl.

3. The positive electrode active material according to claim 1 or 2, the polysiloxane with a linear structure further comprises a blocking group,
optionally, the blocking group includes at least one selected from the group consisting of the following functional groups: a polyether, a C1-C8 alkyl, a C1-C8 haloalkyl, a C1-C8 heteroalkyl, a C1-C8 halogenated heteroalkyl, a C2-C8 alkenyl, a C2-C8 haloalkenyl, a C6-C20 aromatic hydrocarbon group, a C1-C8 alkoxy, a C2-C8 epoxy group, a hydroxyl, a C1-C8 hydroxyalkyl, an amino, a C1-C8 aminoalkyl, a carboxyl and a C1-C8 carboxyalkyl.

4. The positive electrode active material according to any one of claims 1-3, wherein the polysiloxane with a linear structure includes one or more of polydimethylsiloxane, polydiethylsiloxane, polymethylethylsiloxane, polymethylvinylsiloxane, polyphenylmethylsiloxane, polymethylhydrogensiloxane, carboxy-functionalized polysiloxane, epoxy-terminated polysiloxane, methoxy-terminated polydimethylsiloxane, polymethylchloropropylsiloxane, mercaptopropyl polysiloxane, aminoethylaminopropyl polydimethylsiloxane, hydroxypropyl-terminated polysiloxane, hydroxyl-terminated polydimethylsiloxane, polyether-terminated polydimethylsiloxane, side-chain aminopropyl polysiloxane, aminopropyl-terminated polydimethylsiloxane, side-chain hydroxymethyl polysiloxane, side-chain hydroxypropyl polysiloxane, side-chain polyether-grafted polydimethylsiloxane and side-chain phosphate-grafted polydimethylsiloxane, optionally one or more of hydroxyl-terminated polydimethylsiloxane, mercaptopropyl polysiloxane, aminoethylaminopropyl polydimethylsiloxane, side-chain polyether-grafted polydimethylsiloxane and side-chain phosphate-grafted polydimethylsiloxane; and/or,
the polysiloxane with a ring structure includes one or more selected from 1,3,5,7-octamethylcyclotetrasiloxane, 1,3,5,7-tetrahydro-1,3,5,7-tetramethylcyclotetrasiloxane, cyclopentasiloxane, 2,4,6,8-tetramethylcyclotetrasiloxane, 2,4,6,8-tetramethyl-2,4,6,8-tetravinylcyclotetrasiloxane, cyclic polymethylvinylsiloxane, hexadecylmethylcyclooctasiloxane, tetradecamethylcycloheptasiloxane, and cyclopolydimethylsiloxane.

5. The positive electrode active material according to any one of claims 1-4, wherein the polymer is selected from the polysiloxane with a linear structure.

6. The positive electrode active material according to any one of claims 1-5, wherein the number-average molecular weight of the polymer is below 300,000, optionally between 400 and 200,000.

7. The positive electrode active material according to any one of claims 1-6, wherein the polysiloxane has a polar functional group mass content percentage of a, with 0 ≤ a < 50%, optionally 5% ≤ α ≤ 30%.

8. The positive electrode active material according to any one of claims 1-7, wherein
a coating amount of the first coating layer is greater than 0 and less than or equal to 6 wt%, optionally greater than 0 and less than or equal to 5.5 wt%, more optionally greater than 0 and less than or equal to 2 wt%, based on the weight of the inner core; and/or
a coating amount of the second coating layer is greater than 0 and less than or equal to 6 wt%, optionally greater than 0 and less than or equal to 5.5 wt%, more optionally 2-4 wt%, based on the weight of the inner core; and/or
a coating amount of the third coating layer is greater than 0 and less than or equal to 6 wt%, optionally greater than 0 and less than or equal to 5.5 wt%, more optionally greater than 0 and less than or equal to 2 wt%, based on the weight of the inner core; and/or
a coating amount of the fourth coating layer is greater than 0 and less than or equal to 10 wt%, optionally greater than 0 and less than or equal to 5 wt%, more optionally greater than 0 and less than or equal to 2 wt%, based on the weight of the inner core having the first coating layer, the second coating layer and the third coating layer.

9. The positive electrode active material according to any one of claims 1-8, wherein
the first coating layer has a thickness of 1-10 nm; and/or
the second coating layer has a thickness of 2-15 nm; and/or
the third coating layer has a thickness of 2-25 nm; and/or
the fourth coating layer has a thickness of 2-10 nm.

10. The positive electrode active material according to any one of claims 1-9, wherein
the first coating layer has an interplanar spacing of the crystalline pyrophosphate of a range of 0.293-0.470 nm, and an included angle of the crystal direction (111) of 18.00°-32.00°; the second coating layer has an interplanar spacing of the crystalline phosphate of a range of 0.244-0.425 nm, and an included angle of the crystal direction (111) of 20.00°-37.00°.

11. The positive electrode active material according to any one of claims 1-10, wherein in the inner core,
the ratio of y to 1-y is 1 : 10 to 1 : 1, optionally 1 : 4 to 1 : 1; and/or,
the ratio of z to 1-z is 1 : 9 to 1 : 999, optionally 1 : 499 to 1 : 249.

12. The positive electrode active material according to any one of claims 1-11, wherein the carbon in the third coating layer is a mixture of SP2-form carbon and SP3-form carbon, optionally, the molar ratio of the SP2-form carbon to the SP3-form carbon is any value within a range of 0.1-10, optionally any value within a range of 2.0-3.0.

13. The positive electrode active material according to any one of claims 1-12, wherein
based on the weight of the positive electrode active material, the manganese element content is in a range of 10 wt% to 35 wt%, optionally in a range of 15 wt% to 30 wt%, more optionally in a range of 17 wt% to 20 wt%, the phosphorus element content is in a range of 12 wt %-25 wt %, optionally in a range of 15 wt %-20 wt %, and the weight ratio of the manganese element to the phosphorus element is in a range of 0.90-1.25, optionally 0.95-1.20.

14. The positive electrode active material according to any one of claims 1-13, wherein the positive electrode active material satisfies at least one of the following conditions (1) to (4):
(1) the lattice change rate of the positive electrode active material before and after the complete lithium intercalation-deintercalation is no more than 4%, optionally no more than 3.8%, more optionally 2.0-3.8%;
(2) the Li/Mn antisite defect concentration of the positive electrode active material is no more than 4%, optionally no more than 2.2%, more optionally 1.5-2.2%;
(3) the compacted density of the positive electrode active material at 3T is no less than 2.2 g/cm³, optionally no less than 2.2 g/cm³ and no more than 2.8 g/cm³;
(4) the surface oxygen valence state of the positive electrode active material is no more than -1.90, and optionally -1.90 to -1.98.

15. A method for preparing a positive electrode active material, including the following steps:
a step to provide an inner core material: the inner core has a chemical formula of Li₁₊ₓMn_{1-y}A_{y}P_{1-z}R_{z}O₄, wherein x is any value in a range of -0.100 to 0.100, y is any value in a range of 0.001 to 0.500, z is any value in a range of 0.001 to 0.100, and A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S;
coating steps: providing an LiₐMP₂O₇ and/or M_{b}(P₂O₇)_{c} and XPO₄ suspension respectively, adding the inner core material to the suspension, mixing and sintering same to obtain the inner core having a first coating layer, a second coating layer and a third coating layer, and coating the resulting inner core having a first coating layer, a second coating layer and a third coating layer with a polymer by a dry method or a wet method to obtain the positive electrode active material, where 0 ≤ a ≤ 2, 1 ≤ b ≤ 4, 1 ≤ c ≤ 6, the values of a, b and c satisfy the following conditions: keeping the crystalline pyrophosphate LiₐMP₂O₇ and/or M_{b}(P₂O₇)_{c} electrically neutral; M is each independently one or more elements selected from Fe, Ni, Mg, Co, Cu, Zn, Ti, Ag, Zr, Nb and Al; X is one or more elements selected from Li, Fe, Ni, Mg, Co, Cu, Zn, Ti, Ag, Zr, Nb and Al; the polymer includes one or more selected from polysiloxane with a linear structure and polysiloxane with a ring structure;
wherein the positive electrode active material has a core-shell structure, which includes the inner core and a shell coating the inner core, and the shell includes a first coating layer coating the inner core, a second coating layer coating the first coating layer, a third coating layer coating the second coating layer, and a fourth coating layer coating the third coating layer, the first coating layer includes crystalline pyrophosphate LiₐMP₂O₇ and/or M_{b}(P₂O₇)_{c}, the second coating layer includes crystalline phosphate XPO₄, the third coating layer is carbon, and the fourth coating layer includes a polymer, and the polymer includes one or more selected from polysiloxane with a linear structure and polysiloxane with a ring structure.

16. The method for preparing a positive electrode active material according to claim 15, wherein the step of providing the inner core material comprises the following steps:
Step (1): mixing and stirring a manganese source, an element A dopant, and an acid in a container to obtain manganese salt particles doped with the element A;
Step (2): mixing the manganese salt particles doped with the element A with a lithium source, a phosphorus source and an element R dopant in a solvent to obtain a slurry, and sintering same under the protection of an inert gas atmosphere to obtain an inner core doped with the element A and the element R, wherein the inner core doped with the element A and the element R is Li₁₊ₓMn_{1-y}A_{y}P_{1-z}R_{z}O₄, in which x is any value in a range of -0.100 to 0.100, and y is any value in a range of 0.001 to 0.500, z is any value in a range of 0.001 to 0.100, A is one or more elements selected from Zn, Al, Na, K, Mg, Mo, W, Ti, V, Zr, Fe, Ni, Co, Ga, Sn, Sb, Nb and Ge, optionally one or more elements of Fe, Ti, V, Ni, Co and Mg, R is one or more elements selected from B, Si, N and S, optionally, R is one element selected from B, Si, N and S.

17. The method for preparing a positive electrode active material according to claim 16, wherein
in Step (1), the mixing is carried out at a temperature of 20-120°C, optionally 40-120°C; and/or
in Step (1), the stirring is carried out at 400-700 rpm for 1-9 hours, optionally 3-7 hours; and/or
in Step (2), the mixing is carried out at a temperature of 20-120°C, optionally 40-120°C, for 1-10 hours.

18. The method for preparing a positive electrode active material according to either of claims 16-17, wherein
the element A dopant is one or more of the elementary substance, carbonate, sulfate, chloride, nitrate, organic acid salt, oxide, and hydroxide of each of one or more elements selected from Zn, Al, Na, K, Mg, Mo, W, Ti, V, Zr, Fe, Ni, Co, Ga, Sn, Sb, Nb and Ge; and/or,
the element R dopant is one or more of the inorganic acid, organic acid, sulfate, chloride, nitrate, organic acid salt, oxide, and hydroxide of each of one or more elements selected from B, Si, N and S.

19. The method for preparing a positive electrode active material according to any one of claims 15-18, wherein the coating steps comprise:
first coating step: dissolving an element M source, a phosphorus source and an acid, and optionally a lithium source in a solvent to obtain a first coating layer suspension; fully mixing the inner core obtained in the step of providing the inner core material with the first coating layer suspension obtained in the first coating step, drying, and then sintering same to obtain a first coating layer-coated material;
second coating step: dissolving an element X source, a phosphorus source and an acid in a solvent to obtain a second coating layer suspension; fully mixing the first coating layer-coated material obtained in the first coating step with the second coating layer suspension obtained in the second coating step, drying, and then sintering same to obtain a two-layer coating layer-coated material;
third coating step: dissolving a carbon source in a solvent, fully dissolving same to obtain a third coating layer solution; then adding the two-layer coating layer-coated material obtained in the second coating step into the third coating layer solution, uniformly mixing, drying, and then sintering same to obtain a three-layer coating layer-coated material;
fourth coating step: dissolving the polymer in a solvent, fully dissolving same to obtain a fourth coating layer solution; then adding the three-layer coating layer-coated material obtained in the third coating step into the fourth coating layer solution, uniformly mixing, drying to obtain a fourth-layer coating layer-coated material, that is, the positive electrode active material, or mixing the three-layer coating layer-coated material obtained in the third coating step with the polymer uniformly, and then sintering same to obtain a fourth-layer coating layer-coated material, that is, the positive electrode active material.

20. The method for preparing a positive electrode active material according to claim 19, wherein
in the first coating step, the pH of the solution dissolved with the element M source, the phosphorus source and the acid, and optionally the lithium source is controlled to be 3.5-6.5, followed by stirring and reaction for 1-5 h, and then the solution is brought to an increased temperature of 50-120°C and maintained at this temperature for 2-10 h; and/or,
in the first coating step, the sintering is carried out at 650-800°C for 2-6 h; and/or,
in the second coating step, after dissolving the element X source, the phosphorus source and the acid in the solvent, the mixture is stirred and reacted for 1-10 h, then the solution is brought to an increased temperature of 60-150°C and maintained at this temperature for 2-10 h; and/or,
in the second coating step, the sintering is carried out at 500-700°C for 6-10 h; and/or,
in the third coating step, the sintering is carried out at 700-800°C for 6-10 h.

21. A positive electrode plate, comprising a positive electrode current collector and a positive electrode film layer provided on at least one surface of the positive electrode current collector, the positive electrode film layer comprising a positive electrode active material of any one of claims 1-14 or a positive electrode active material prepared by the method for preparing a positive electrode active material according to any one of claims 15-20, and the content of the positive electrode active material in the positive electrode film layer being 90-99.5 wt%, and optionally 95-99.5 wt%, based on the total weight of the positive electrode film layer.

22. The positive electrode plate according to claim 21, wherein
the solid-liquid contact angle between the positive electrode film layer and a nonaqueous organic solvent is between 3° and 90°, optionally between 3° and 60°, and further between 10° and 30°; and/or,
the positive electrode film layer has a porosity of 15% to 50%, and optionally, 15% to 30%.

23. A secondary battery, comprising a positive electrode active material of any one of claims 1-14 or a positive electrode active material prepared by the method for preparing a positive electrode active material according to any one of claims 15-20 or a positive electrode plate according to either of claims 21-22.

24. A power consuming device comprising a secondary battery according to claim 23.
